# EUROPEAN PATENT SPECIFICATION

(11) **EP 2 682 214 B1**
(45) Date of publication and mention of the grant of the patent: **26.06.2019**
(21) Application number: 12752210.0
(22) Date of filing: 17.02.2012
(51) Int. Cl.: B23D 47/12

(54) **PORTABLE CIRCULAR SAW COMPRISING AN OUTER ROTOR TYPE BRUSHLESS ELECTRIC MOTOR**
TRAGBARE KREISSÄGE MIT BÜRSTENLOSEM AUSSENLÄUFER-ELEKTROMOTOR
SCIE CIRCULAIRE PORTABLE À MOTEUR ÉLECTRIQUE SANS BALAIS DE TYPE À ROTOR EXTÉRIEUR

(30) Priority: 28.02.2011 JP 2011041434; 28.02.2011 JP 2011041432; 28.02.2011 JP 2011041436; 22.03.2011 JP 2011062371
(43) Date of publication of application: 08.01.2014
(73) Proprietor: Makita Corporation, Anjo-shi, Aichi 446-8502 (JP)
(72) Inventor: OTA Kenichi, Anjo-shi Aichi 446-8502 (JP); FUKUOKA Toru, Anjo-shi Aichi 446-8502 (JP)
(74) Representative: Kramer Barske Schmidtchen Patentanwälte PartG mbB
(86) International application number: PCT/JP2012/053816
(87) International publication number: WO 2012/117870

(56) References cited:
- EP-A1- 2 527 098
- EP-A1- 2 532 488
- JP-A- 2001 293 672
- JP-A- 2002 346 953
- JP-A- 2006 150 571
- JP-A- 2007 116 818

## Description

### TECHNICAL FIELD

The present invention relates to a portable circular saw as per the preamble of claim 1.

### BACKGROUND ART

JP 2006-150571 A discloses a power tool having an electric motor. JP 2001-293672 A discloses a rechargeable electric tool.

JP 2011-20205 A discloses a portable circular saw as per the preamble of claim 1.

JP 2011-20205 A discloses a technique related to a cutting tool using an inner rotor type brushless motor as the drive source. The cutting tool further comprises a tool main body, a handle portion and a circuit board attached to one end of the brushless motor. The inner rotor type brushless motor has, on the inner side of the motor, a rotor including permanent magnets (magnets) including N-poles and S-poles, and, on the outer side of the motor, a stator constituted by a three-phase stator winding.

In contrast to the inner rotor type brushless motor, the outer rotor type brushless motor has, on the outer side of the motor, a rotor including permanents magnet including N-poles and S-poles, and, on the inner side of the motor, a stator constituted by a three-phase stator winding.

Assuming that their motors including the rotor and the stator are of the same size, comparison of the outer rotor type brushless motor and the inner rotor type brushless motor shows that the outer rotor type brushless motor can provide a larger torque since the magnets mounted to the outer rotor may have a larger surface area than those mounted to the inner rotor.

Thus, the outer rotor type brushless motor may be reduced in size as compared with the inner rotor type one without accompanying an increase in size (i.e., with the torque remaining the same); otherwise, the outer rotor type brushless motor may provide lower rotation-higher torque as compared with the inner rotor type one if no reduction in size is effected and they are of equivalent size.

### SUMMARY OF THE INVENTION

### PROBLEMS TO BE SOLVED BY THE INVENTION

While there has been a demand for a further enhancement in the power of cutting tools on the market, the conventional cutting tool has been enabled to provide the requisite output by employing a motor of high rotation-low torque, and has been adjusted so as to provide suitable rotation of a cutter and torque for cutting by utilizing a speed reduction mechanism.

However, employing a motor of higher rotation may cause problems such as an increase in the wind noise and vibration of the motor itself.

It is an object of the present invention to achieve both an enhancement in motor power and a reduction in the wind noise and vibration of the motor itself by mounting an outer rotor type brushless motor that can be set to low rotation-high torque without accompanying an increase in the output and size of the motor as compared with the inner rotor type brushless motor.

### MEANS FOR SOLVING THE PROBLEMS

The above problem can be solved by providing a portable circular saw according to claim 1. Preferred embodiments are disclosed by the dependent claims. In the description below, the term "cutting tool" should be read as "portable circular saw".

### BRIEF DESCRIPTION OF THE DRAWINGS

Fig. 1 is an overall front view of a cutting tool according to a first embodiment (not showing all features of claim 1).
Fig. 2 is an overall plan view of the cutting tool according to the first embodiment.
Fig. 3 is a vertical sectional view, taken along arrow line (III)-(III) of Fig. 1, of the cutting tool according to the first embodiment.
Fig. 4 is an overall rear view, as seen from the direction of arrow (IV) of Fig. 2, of the cutting tool according to the first embodiment.
Fig. 5 is a vertical sectional view of a cutting tool according to a second embodiment (not showing all features of claim 1), which is equipped with a gear mesh-engagement type shaft displacement mechanism.
Fig. 6 is a vertical sectional view of a cutting tool according to a third embodiment (not showing all features of claim 1), which is equipped with a belt transmission type shaft displacement mechanism.
Fig. 7 is an overall front view of a cutting tool according to a fourth embodiment (not showing all features of claim 1).

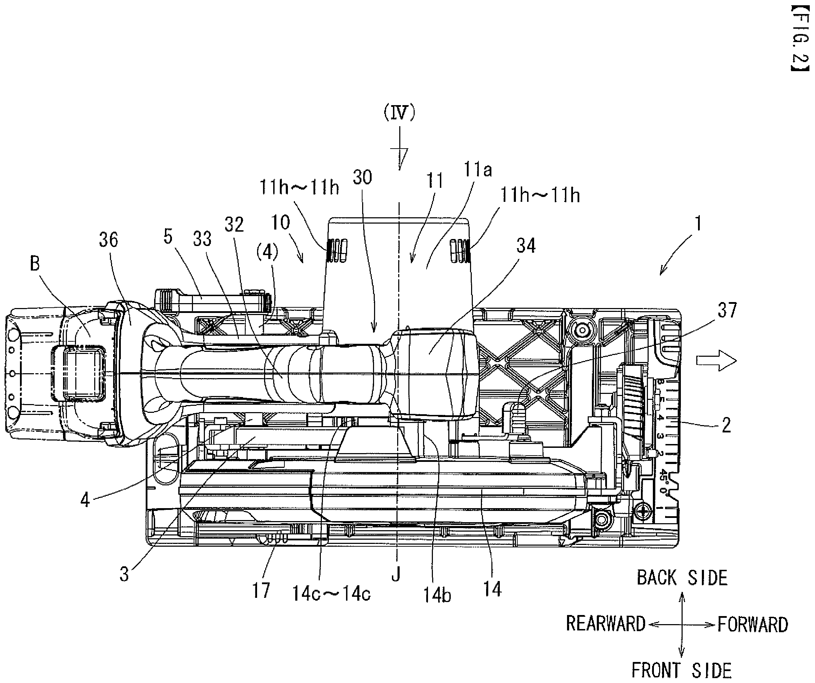

Fig. 2 is an overall plan view of the cutting tool according to the fourth embodiment.

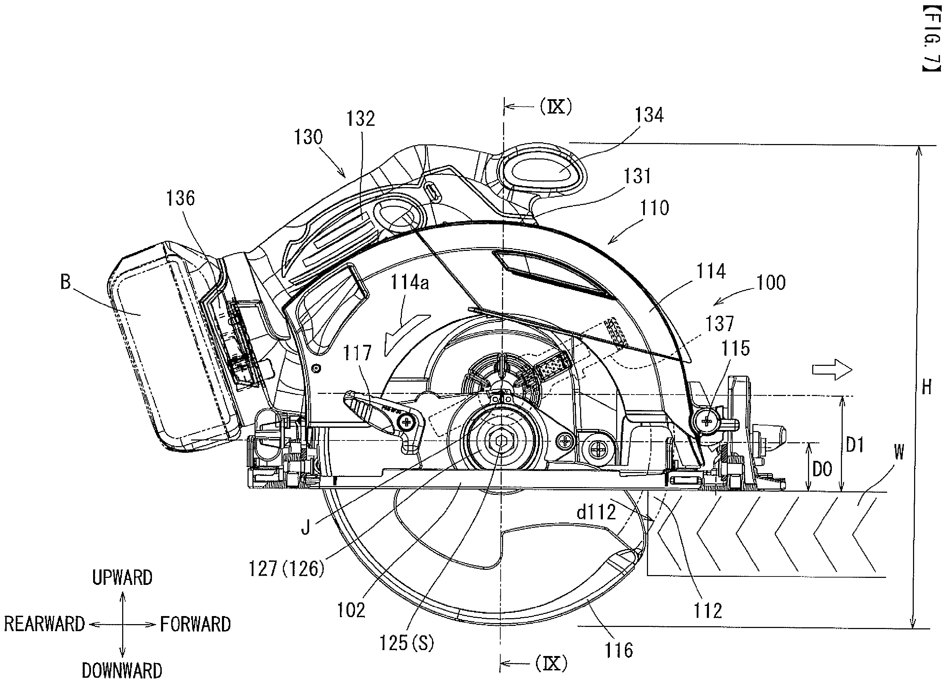

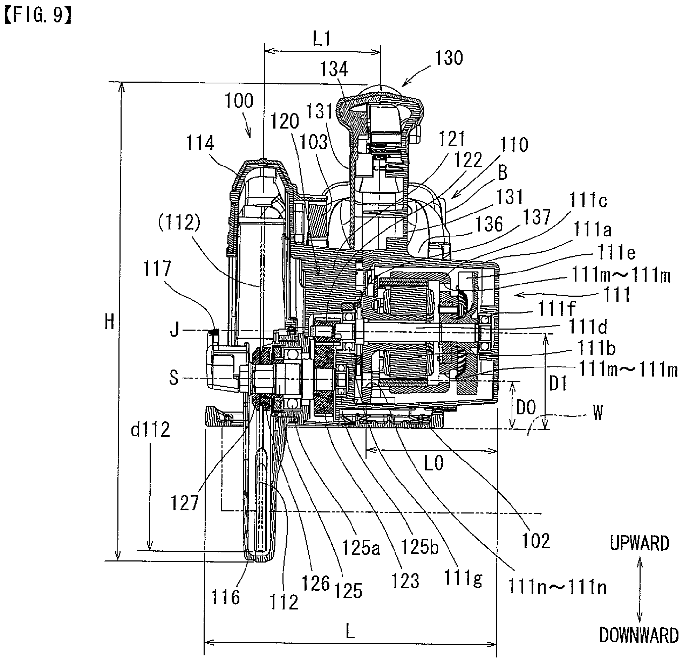

Fig. 9 is a vertical sectional view, taken along arrow line (IX)-(IX) of Fig. 7, of the cutting tool according to the fourth embodiment.

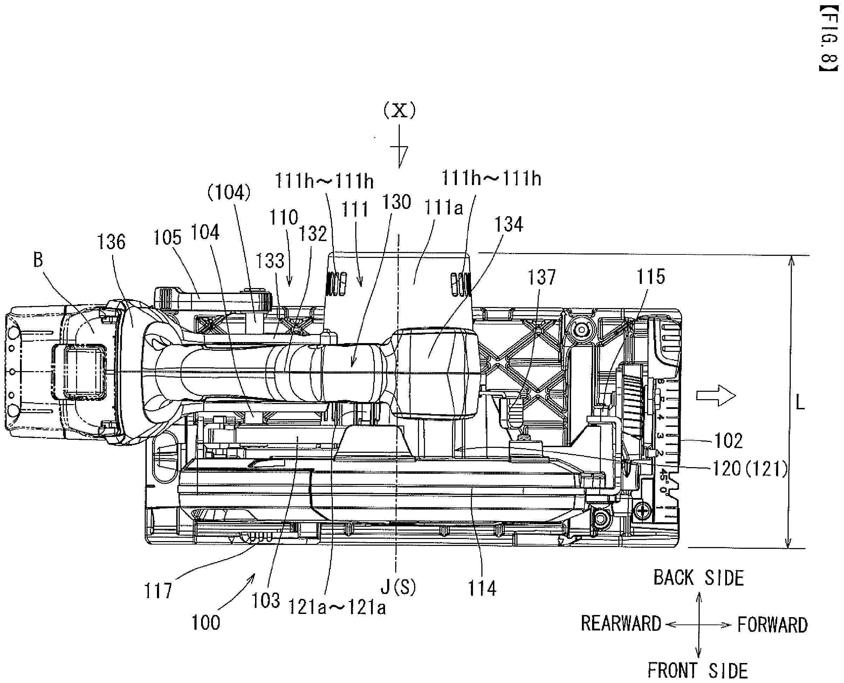

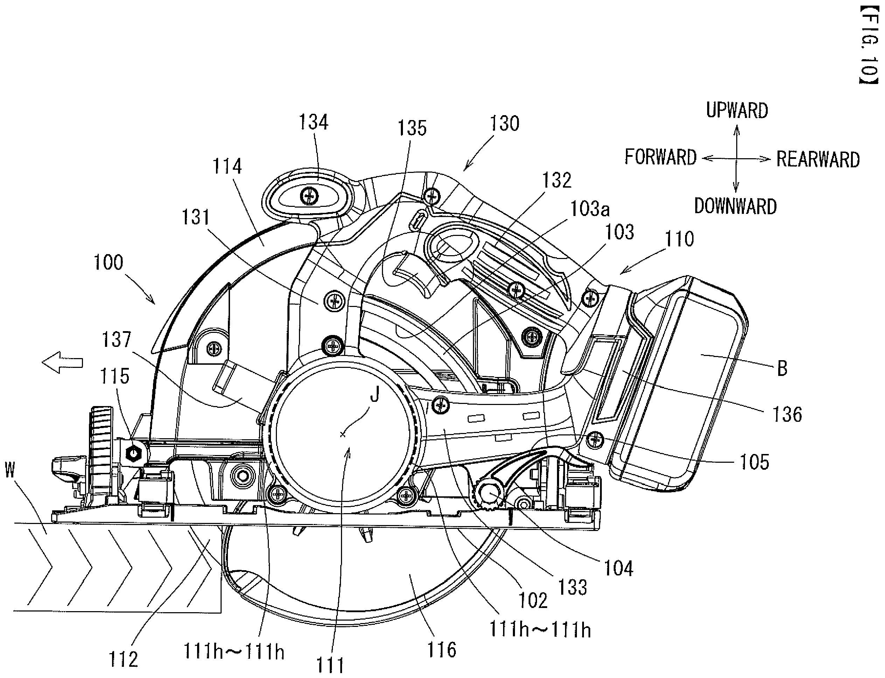

Fig. 10 is an overall rear view, as seen from the direction of arrow (X) of Fig. 8, of the cutting tool according to the fourth embodiment.

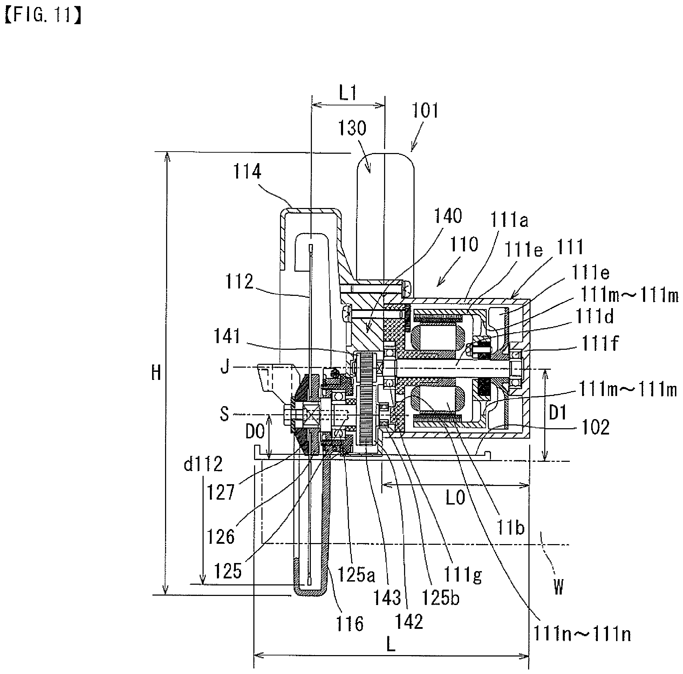

Fig. 11 is a vertical sectional view of a cutting tool according to a fifth embodiment (not showing all features of claim 1), which is equipped with a belt transmission type speed reduction device.

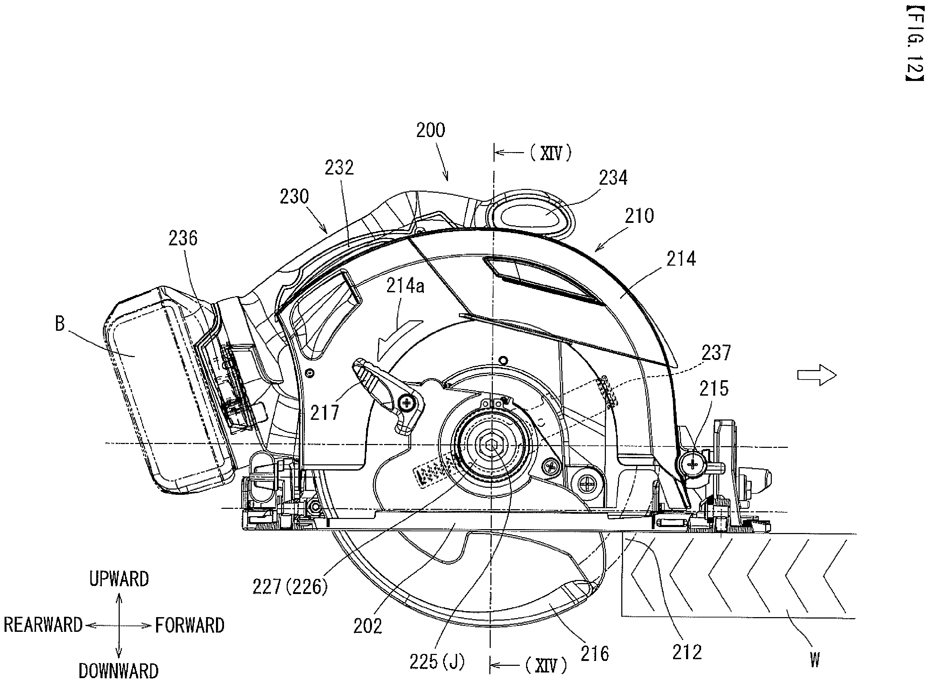

Fig. 12 is an overall front view of a cutting tool according to a sixth embodiment.

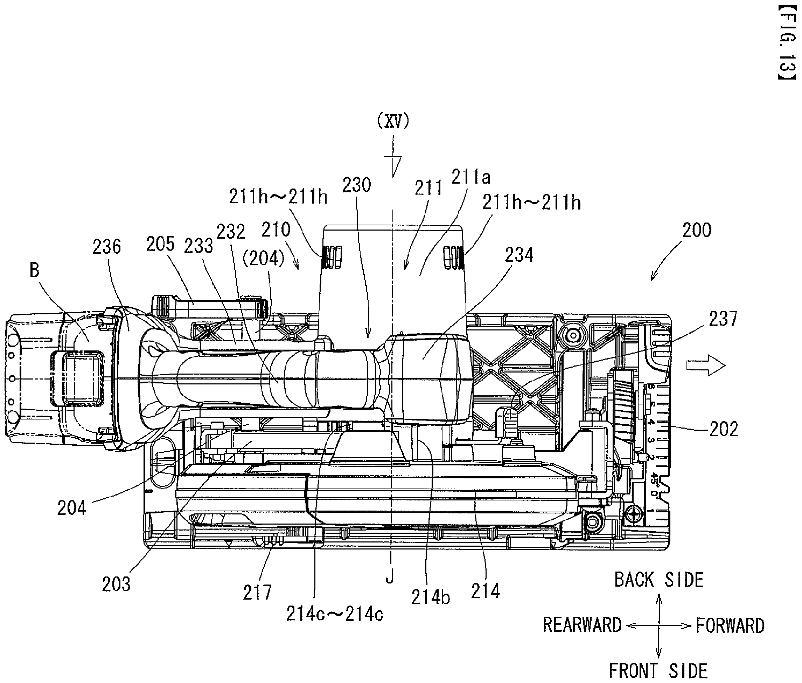

Fig. 13 is an overall plan view of the cutting tool according to the sixth embodiment.

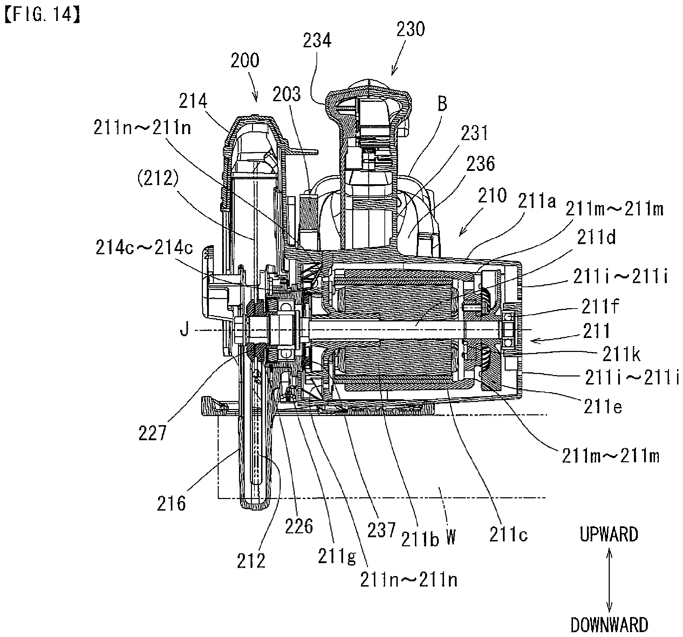

Fig. 14 is a vertical sectional view, taken along arrow line (XIV)-(XIV) of Fig. 12, of the cutting tool according to the sixth embodiment.

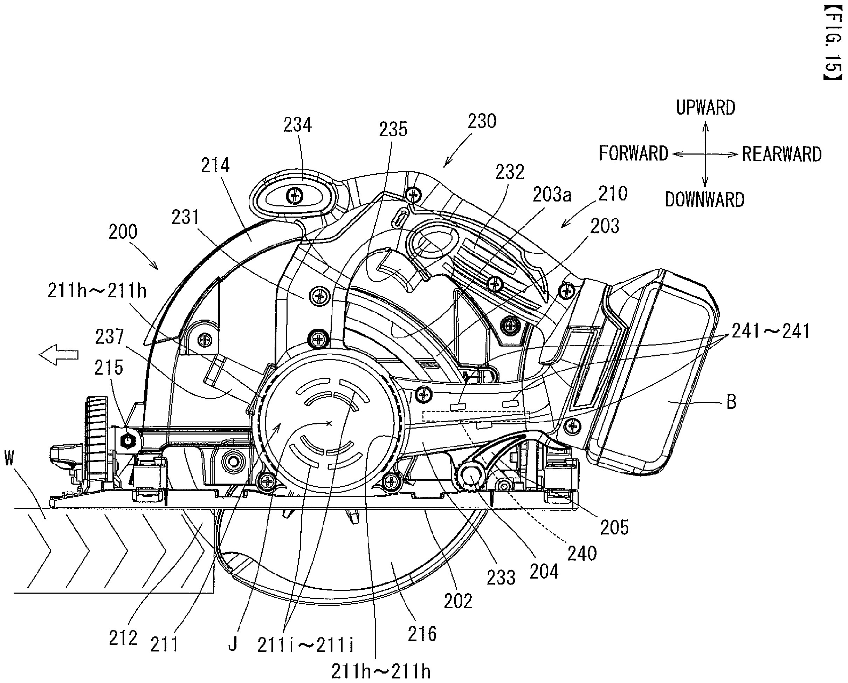

Fig. 15 is an overall rear view, as seen from the direction of arrow (XV) of Fig. 13, of the cutting tool according to the sixth embodiment.

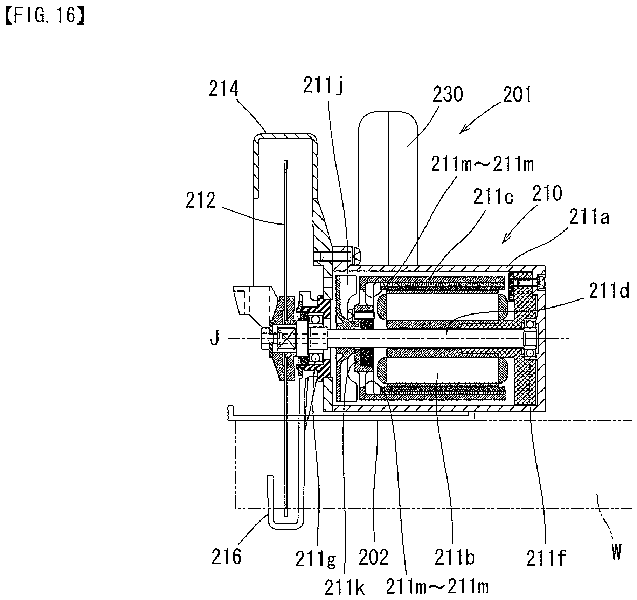

Fig. 16 is a vertical sectional view of a cutting tool according to a seventh embodiment (not showing all features of claim 1), which is equipped with a cooling fan on the front side of a rotor.

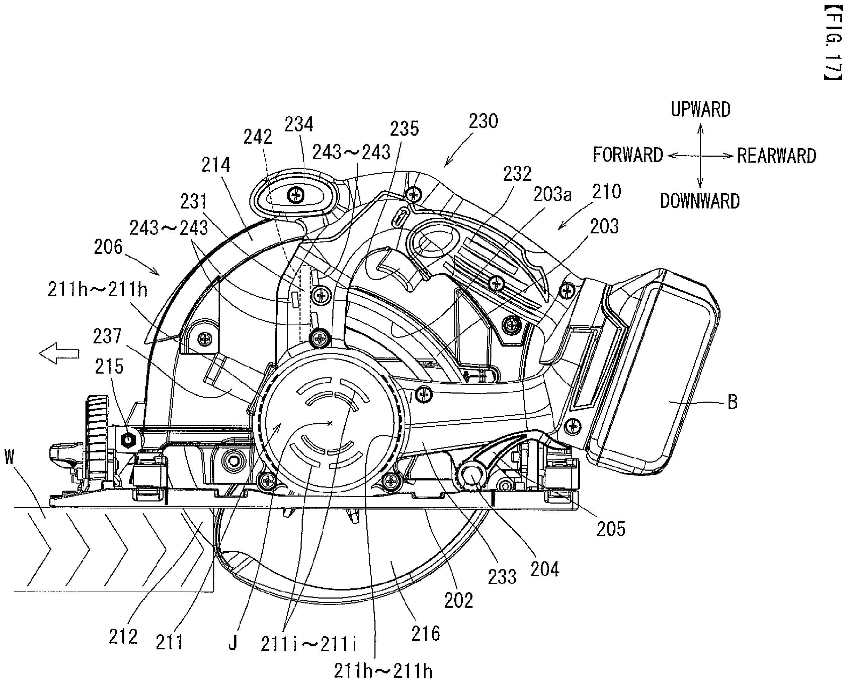

Fig. 17 is a vertical sectional view of a cutting tool according to an eighth embodiment, which includes a circuit board disposed within an uprise portion of a handle portion.

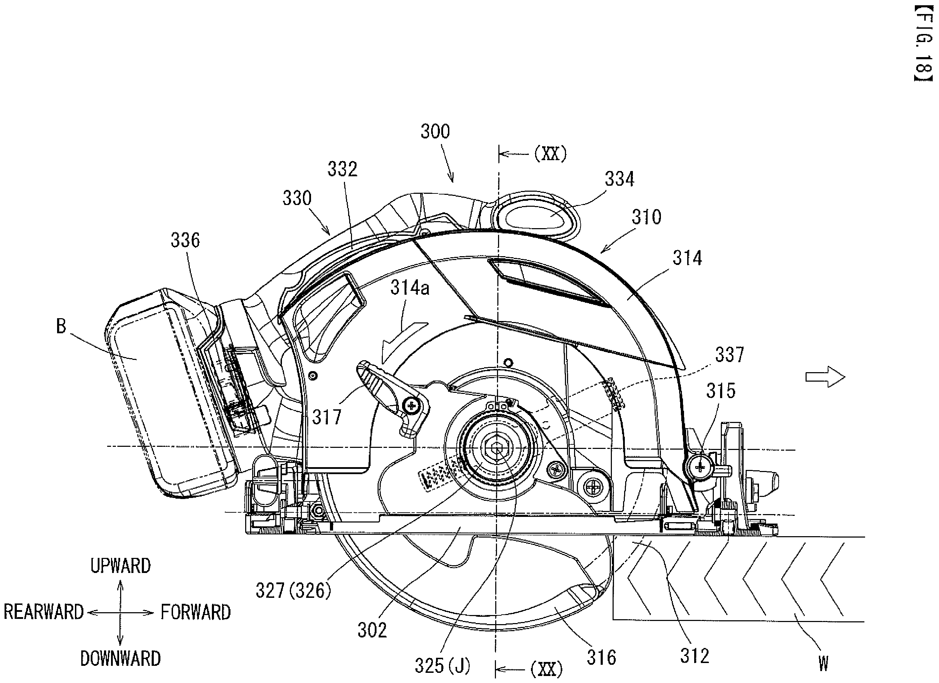

Fig. 18 is an overall front view of a cutting tool according to a ninth embodiment (not showing all features of claim 1). In this figure, an outline arrow indicates the direction in which a cutting operation proceeds.

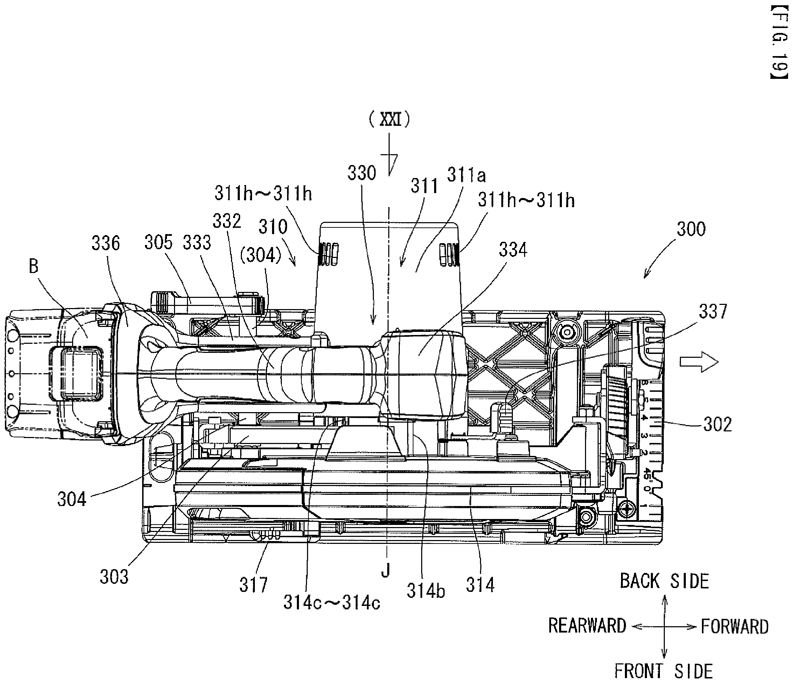

Fig. 19 is an overall plan view of the cutting tool according to the ninth embodiment (not showing all features of claim 1). In this figure, an outline arrow indicates the direction in which a cutting operation proceeds.

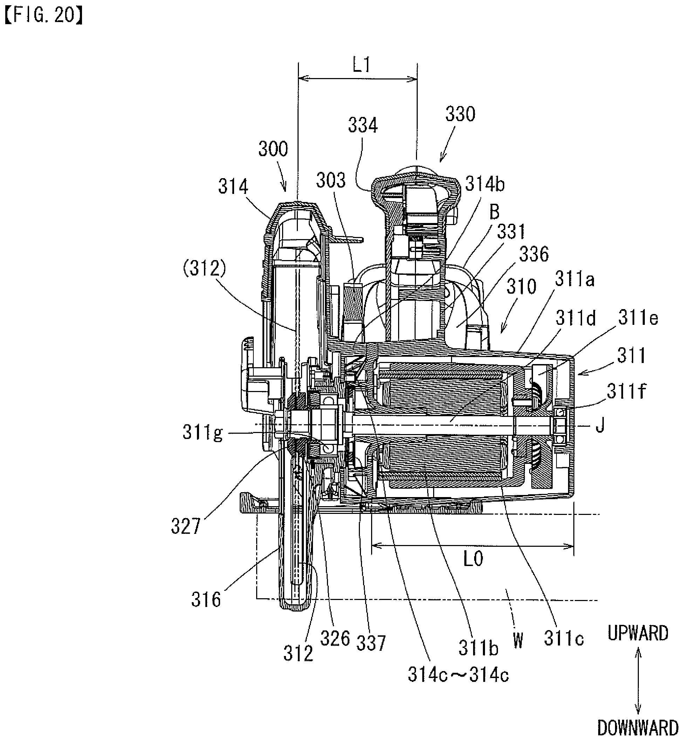

Fig. 20 is a vertical sectional view, taken along arrow line (XX)-(XX) of Fig. 18, of the cutting tool according to the ninth embodiment. This figure shows an outer rotor type brushless motor as the drive source.

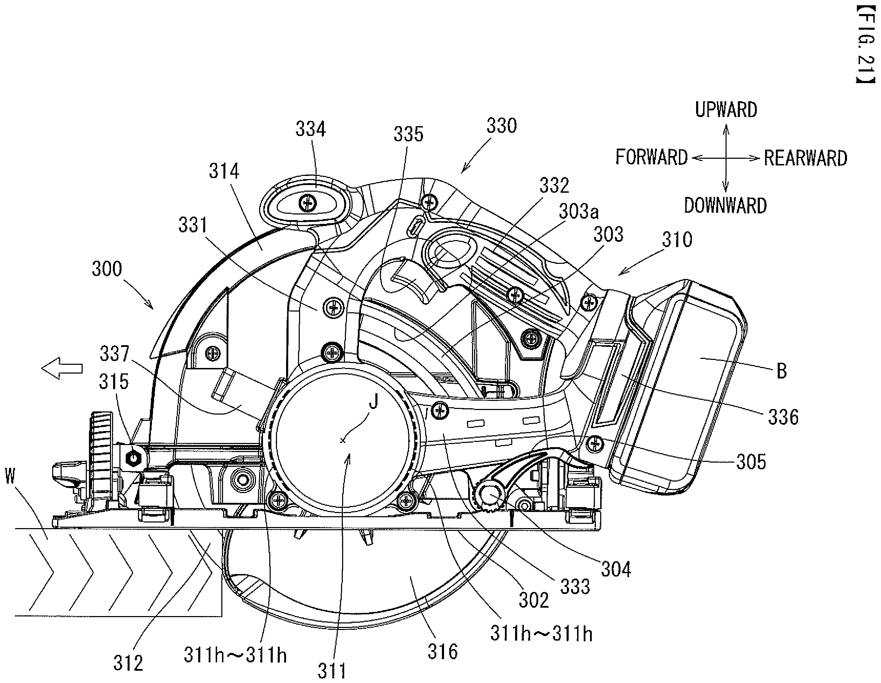

Fig. 21 is an overall rear view, as seen from the direction of arrow (XXI) of Fig. 19, of the cutting tool according to the ninth embodiment. In this figure, an outline arrow indicates the direction in which a cutting operation proceeds.

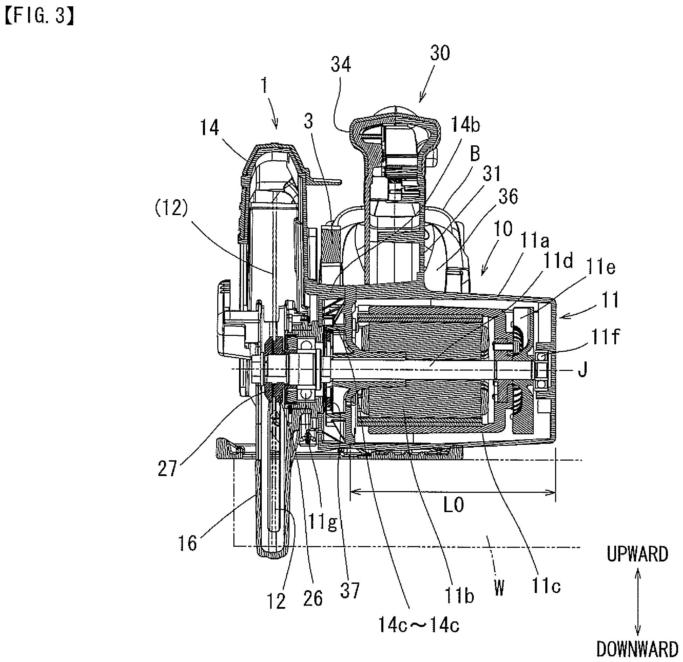

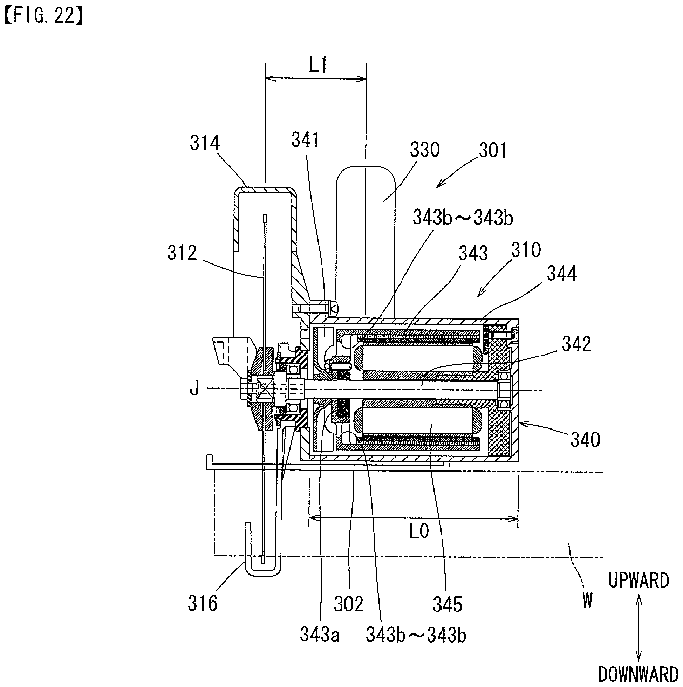

Fig. 22 is a vertical sectional view of a cutting tool according to a tenth embodiment (not showing all features of claim 1). This figure shows an outer rotor type brushless motor as the drive source. It differs from that shown in Fig. 3 in that a cooling fan is provided on the front side.

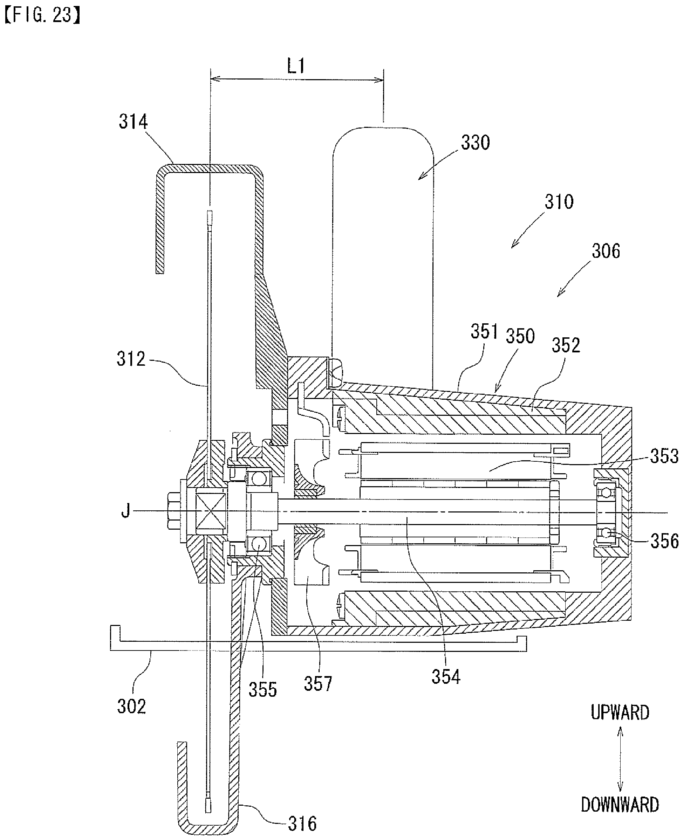

Fig. 23 is a vertical sectional view of a cutting tool according to an eleventh embodiment (not according to the invention). This figure shows an inner rotor type brushless motor as the drive source.

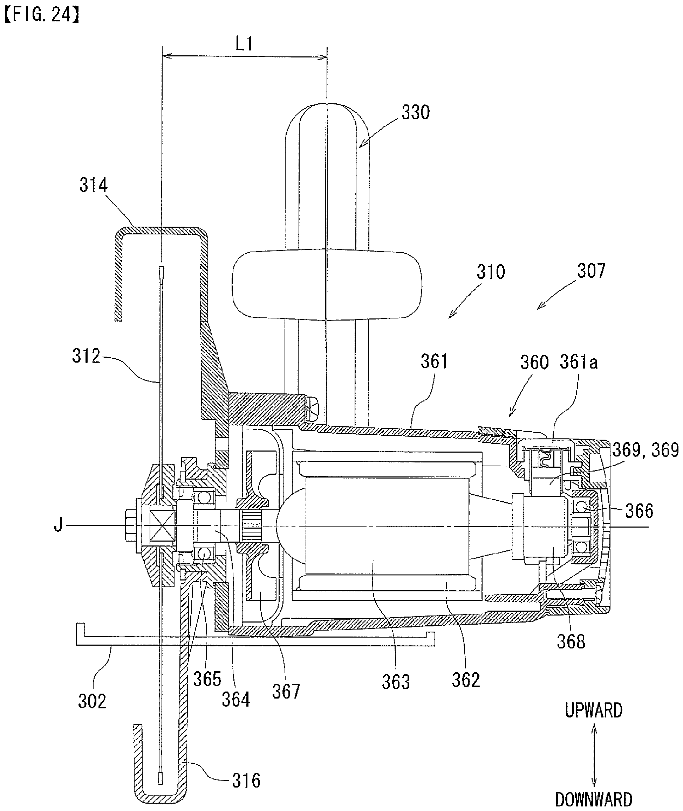

Fig. 24 is a vertical sectional view of a cutting tool according to a twelfth embodiment (not according to the invention). This figure shows an inner rotor type brushless motor as the drive source.

### MODE FOR CARRYING OUT THE TEACHINGS

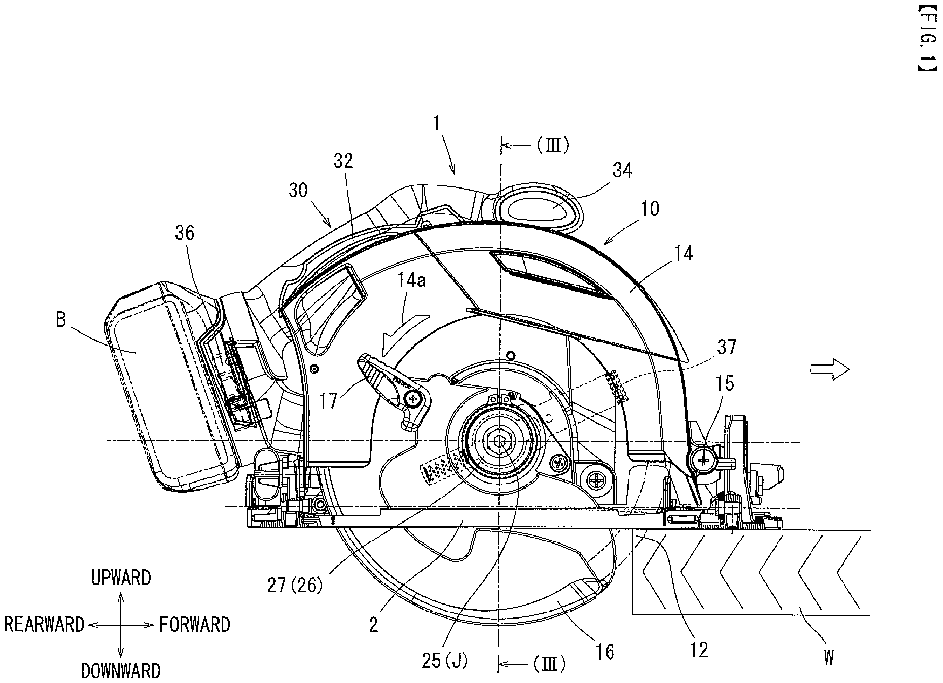

Next, the first embodiment (not showing all features of claim 1) will be described with reference to Figs. 1 through 6. Figs. 1 through 3 illustrate a cutting tool 1 according to the first embodiment. The cutting tool 1 is a so-called portable circular saw, and is provided with a base 2 of a flat plate configuration for contacting with the upper surface of a workpiece W, and a tool main body 10 supported on the upper side of the base 2.

The tool main body 10 is provided with an electric motor 11 as a drive source, and a circular rotary cutter 12 directly mounted to an output shaft 11d of the electric motor 11. The lower portion side of the rotary cutter 12 protrudes from the lower surface of the base 2, and this protruding portion cuts into the workpiece W, whereby the cutting operation is performed. In the drawings, the cutting tool 1 is moved in the cutting proceeding direction indicated by the outline arrow, whereby the rotary cutter 12 is brought to cut into the workpiece. In the following description, with respect to the forward and rearward direction of the components or of the structures, the direction in which the cutting operation proceeds will be referred to as the front side or the front portion, and the side opposite the same will be referred to as the rear side or the rear portion. However, regarding the electric motor 11, the side of the rotary cutter 12 with respect to the motor axis direction J will be referred to as the front side or the front portion, and the side opposite the same will be referred to as the rear side or the rear portion.

As shown in Fig. 3, as the electric motor 11, there is employed an electric motor which is a brushless motor and which is a so-called outer rotor type motor. This electric motor 11 is provided with a rotor 11c rotatably supported on the outer peripheral side of a stator 11b that is fixed in position within a motor case 11a. An output shaft 11d is mounted to the rotor 11c. The output shaft 11d is rotatably supported via bearings 11f and 11g. The rear side bearing 11f is mounted to the rear portion of the motor case 11a, and the front side bearing 11g is mounted to a motor mounting base portion 14b provided on the backside of a blade case 14.

A cooling fan 11c for cooling the motor is mounted to the rear portion of the output shaft 11d. A number of exhaust holes (air windows) 11h are provided in the rear portion of the motor case 11a at positions around the cooling fan 11e. On the other hand, as shown in Fig. 2, intake holes 14c are provided in the rear surface of the motor mounting base portion 14b. When the electric motor 11 is started to rotate the cooling fan 11e, external air is introduced through the intake holes 14c. The introduced external air (cooling air) flows toward the rear portion of the motor due to the wind force thereof, whereby the electric motor is cooled. The cooling air flown toward the rear side of the motor is discharged to the exterior via the exhaust holes 11h.

The length (machine length L0) in the axial direction (the left and right direction as seen in Fig. 3) of the electric motor 11 is set to be small so as to be approximately the same as an electric motor which is an inner rotor type motor and which is a so-called brushless motor.

The front end side of the output shaft 11d of the electric motor 11 protrudes from the motor case 11a, and enters the blade case 14. The rotary cutter 12 is directly mounted to the front end of the output shaft 11d protruding into the blade case 14. The rotary cutter 12 is firmly mounted to the front end of the output shaft 11d in the state of being clamped between a reception flange 26 and a presser flange 27.

Thus, the cutting tool 1 according to the present embodiment is a direct drive type cutting tool, and the rotary cutter 12 rotates together with the electric motor 11 at the same rotational speed. In the present embodiment, the rotational speed Rm of the electric motor 11 is set to approximately 6,000 RPM. Thus, the rotational speed Rc of the rotary cutter 12 is set to the same rotational speed as the rotational speed Rm of the electric motor 11, i.e., to approximately 6,000 RPM.

The rotary cutter 12 rotates counterclockwise as seen from the front side. On the front side of the blade case 14, the rotational direction of the rotary cutter 12 is indicated by arrow 14a.

The rotational speed of the rotary cutter 12 is set appropriately according to the diameter thereof, the material of the workpiece W, etc. For example, in the case where the workpiece W is wood, the rotational speed of the rotary cutter 12 having a diameter of approximately 185 mm to 190 mm is preferably set to approximately 5,000 to 6,000 RPM; and, in the case where the workpiece W is metal, it is preferably set to approximately 3,000 to 4,000 RPM. In the case of the rotary cutter 12 having a diameter of approximately 110 mm to 125 mm, it is preferable to set its rotational speed to approximately 7,000 to 9,000 RPM when the workpiece W is wood. Further, in the case of the rotary cutter 12 having a diameter of approximately 210 mm to 235 mm, it is preferable to set its rotational speed to approximately 3,500 to 4,500 RPM when the workpiece W is wood.

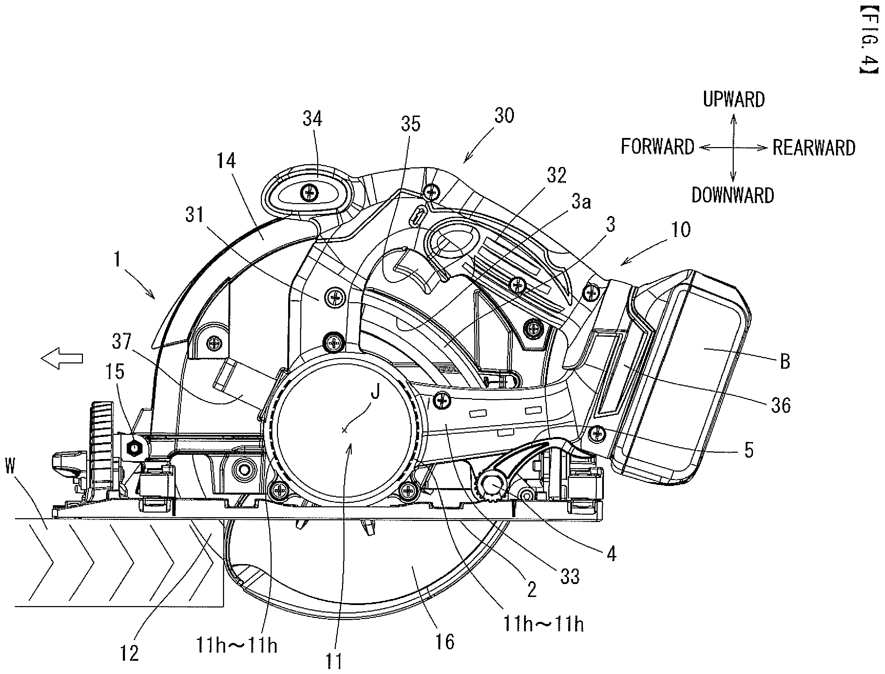

The tool main body 10 is supported on the upper side of the base 2 via a front side tilt support shaft 15 so as to be vertically tiltable. By changing the vertical tilting position of the tool main body 10 with respect to the base 2, it is possible to change the dimension by which the rotary cutter 12 protrudes toward the lower surface side of the base 2, whereby it is possible to adjust the cutting depth of the rotary cutter 12 into the workpiece W. As shown in Fig. 2, the rear portion side of the tool main body 10 is supported on the base 2 via a guide member 3 having a curved configuration and referred to as a depth guide, which is mounted to the upper portion of the base 2 in an uprise state. As shown in Fig. 4, the guide member 3 is provided with a guide hole 3a having a curved and elongated configuration and extending along the longitudinal direction thereof. By fastening a fixing screw 4 inserted into the guide hole 3a of the guide member 3 into to the back surface side of the blade case 14, the tilting position of the tool main body 10 with respect to the base 2 is fixed. The fixing screw 4 can be fastened through rotation in the fastening direction of an operation lever 5 mounted to the back surface side end portion thereof. When the fixing screw 4 is loosened through rotation of the operation lever 5, the tool main body 10 is allowed to vertically tilt with respect to the base 2, whereby it is possible to change the cutting depth of the rotary cutter 12.

The substantially half the circumference on the lower side of the rotary cutter 12 protruding toward the lower surface side of the base 2 is covered with a movable cover 16. This movable cover 16 is supported by the blade case 14 so as to be rotatable around the rotary cutter 12. As shown in Fig. 1, the forward end portion of the movable cover 16 may contact the workpiece W, and, in this contact state, the cutting tool 1 is moved in the cutting proceeding direction indicated by the outline arrow in the drawing, so that the rotary cutter 12 cuts into the workpiece W, whereby the movable cover 16 is gradually opened. A grip 17 is mounted to the rear portion of the movable cover 16. By grasping this grip 17, the user can rotate the movable cover 16 in the opening direction, so that an operation such as the replacement of the rotary cutter 12 can be conveniently performed.

A handle portion 30 is provided on the upper portion of the electric motor 11. As shown in Fig. 4, the handle portion 30 is of a chevron-loop-shaped configuration extending from the upper portion to the rear portion of the electric motor 11, and has an uprise portion 31 rising upwardly from the upper portion of the electric motor 11, a main grip portion 32 extending downwardly in the rearward direction from the upper portion of the uprise portion 31, and a connection portion 33 connecting the rear portion of the main grip portion 32 to the rear portion of the electric motor 11. The main grip portion 32 is a portion adapted to be grasped by one hand of the user, and a switch lever 35 is arranged on the lower surface side thereof. On the upper part of the uprise portion 31, a front grip portion 34 adapted to be grasped by the other hand of the user is provided so as to protrude forwards.

A battery mounting base portion 36 is provided at the rear part of the main grip portion 32. A battery pack B is attached to the battery mounting base portion 36. The battery pack B can be slid upwards to be detached from the battery mounting base portion 36; conversely, it can be slid downwards to be mounted to the battery mounting base portion 36. The detached battery pack B can be repeatedly used through recharging by a charger separately prepared. The electric motor 11 is started by using the battery pack B as the power source.

At the front portion of the electric motor 11, there is provided a lock lever 37 for locking the rotation of the output shaft 11d. When the lock lever 37 is moved in the longitudinal direction thereof, the rotation of the output shaft 11d is locked, so that an operation such as the replacement of the rotary cutter 12 can be conveniently performed.

In the present embodiment, constructed as described above, the rotary cutter 12 is, due to the direct drive system, directly mounted to the output shaft 11d of the electric motor 11, so that the rotational speed Rc of the rotary cutter 12 and the rotational speed Rm of the electric motor 11 coincide with each other (the ratio α = 1.0). Thus, because the rotational speed Rm of the electric motor 11 coincides with the proper rotational speed Rc of the rotary cutter 12, it can be rotated at a low speed, for example, of approximately 6,000 RPM, whereby it is possible to achieve a reduction in the wind noise or vibration of mainly the cooling fan 11e of the electric motor 11 and to eventually realize a reduction in the noise and vibration of the cutting tool 1.

The first embodiment described above may be modified in various ways. For example, the above embodiment incorporates the direct drive system (the ratio α = 1.0), in which the rotary cutter 12 is directly mounted to the output shaft 11d of the electric motor 11, whereby the outer rotor type electric motor 11 as the drive source is rotated at a low speed rotation for achieving a reduction in noise and vibration of the cutting tool 1. However, it is possible to attain the same effect by setting the rotational output of the electric motor 11 to a range of the ratio α = 0.5 to 2.0 through the intermediation of a shaft displacement mechanism 20 that will be described below.

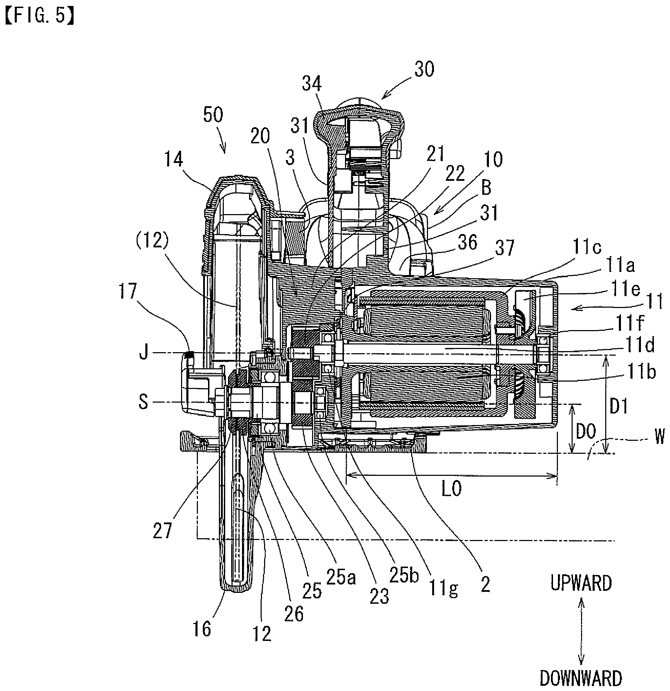

Fig. 5 shows a cutting tool 50 according to the second embodiment (not showing all features of claim 1). The components and the construction that are the same as those of the first embodiment are labeled with the same reference numerals, and a description thereof will be omitted. In the case of the second embodiment, the shaft displacement mechanism 20 is interposed between the electric motor 11 and the back surface of the blade case 14. The front end side of the output shaft 11d of the electric motor 11 enters a case 21 of the shaft displacement mechanism 20. A driving gear 22 is mounted to the front end of the output shaft 11d entering the case 21. The driving gear 22 is in mesh with a driven gear 23. The driven gear 23 is fixed to a spindle 25.

The number of teeth of the driving gear 22 is set to the same as that of the driven gear 23, so that the ratio α of the shaft displacement mechanism 20 is set to 1.0. Thus, although the direct drive system is not incorporated as in the first embodiment, the rotational speed Rc of the rotary cutter 12 (the rotational speed of the spindle 25) coincides with the rotational speed Rm of the electric motor 11 also in the second embodiment.

The spindle 25 is rotatably supported by the case 21 via bearings 25a and 25b. The front end side of this spindle 25 protrudes into the blade case 14. The rotary cutter 12 is mounted to the spindle 25 protruding into the blade case 14. As in the first embodiment, the rotary cutter 12 is firmly mounted in the state of being clamped between the reception flange 26 and the presser flange 27. The spindle 25 is parallel to the output shaft 11d of the electric motor 11, and is arranged at an axis height of D0 on the lower side of the output shaft 11d, whose axis height from the lower surface of the base 2 is D1 (D1 > D0). Thus, the rotation center of the rotary cutter 12 (the axis height D0 of the spindle 25) is set to a position closer to the base 2 than the axis height D1 of the output shaft 11d of the electric motor 11, whereby it is possible to set a large maximum cutting depth for the rotary cutter 12 with respect to the workpiece W.

With the cutting tool 50 according to the second embodiment constructed as described above, the rotational output of the electric motor 11 is transmitted to the rotary cutter 12 via the shaft displacement mechanism 20 whose ratio α is set to 1.0. Thus, if the proper rotational speed Rc of the rotary cutter 12 is, for example, approximately 6,000 RPM, it is possible to also set the rotational speed Rm of the electric motor 11 to approximately 6,000 RPM.

Conventionally, when using an electric motor as the drive source of an electric tool, it is normally rotated at a high speed of approximately 25,000 RPM; in this regard, according to the second embodiment, it is enough to rotate the outer rotor type electric motor 11 at a very low-speed of approximately 6,000 RPM, so that it is possible to achieve a reduction in the wind noise and vibration of mainly the cooling fan 11e of the electric motor 11 and eventually to realize a reduction in the noise and vibration of the cutting tool 50.

The exemplified ratio α may be changed within a range of 0.5 to 2.0. The change in the ratio α can be made through a change in the number of teeth of the driving gear 22 and of the driven gear 23. Also by changing the ratio α within the range of 0.5 to 2.0, it is enough to rotate the outer rotor type electric motor 11 as the drive source at a much lower speed (Rm = 3,000 to 12,000 RPM) as compared with the prior art, so that it is possible to attain the same effect.

Further, according to the second embodiment, it is possible to set the axis height D0 of the rotary cutter 12 to be smaller than the axis height D1 of the electric motor 11 with the intervention of the shaft displacement mechanism 20, so that it is possible to set a large maximum cutting depth for the cutting tool 50.

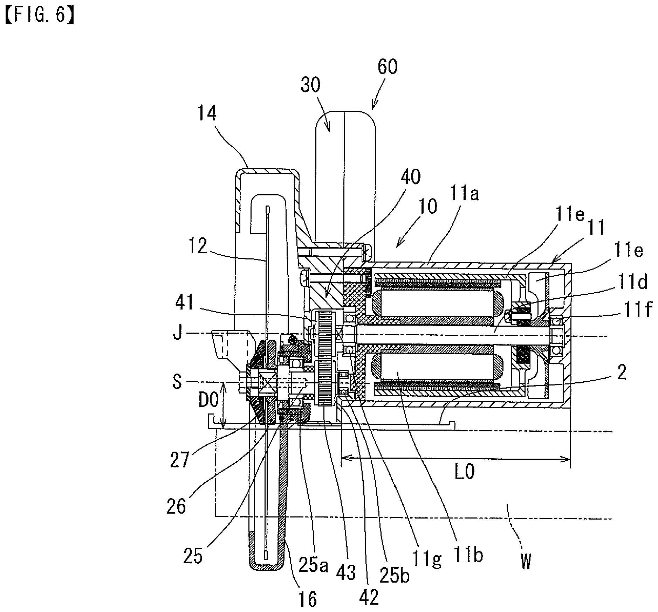

Fig. 6 shows a cutting tool 60 according to the third embodiment (not showing all features of claim 1). In Fig. 6, parts of the members such as the front grip 34 and the battery pack B are omitted. The third embodiment incorporates a shaft displacement mechanism 40, which differs in construction from the gear mesh-engagement type displacement mechanism of the second embodiment. The components and the constructions that are the same as those of the second embodiment are labeled with the same reference numerals, and a description thereof will be omitted.

In the third embodiment, there is provided a belt transmission type displacement mechanism having a transmission belt 43 stretched between a driving side pulley 41 and a driven side pulley 42. The driving side pulley 41 and the driven side pulley 42 employed are pulleys of the same effective diameter. Therefore, the ratio α of the shaft displacement mechanism 40 according to the third embodiment is also set to 1.0.

Also in this third embodiment, the rotational output of the electric motor 11 is transmitted to the rotary cutter 12 via the shaft displacement mechanism 40 whose ratio α is set to 1.0. Thus, if the proper rotational speed Rc of the rotary cutter 12 is, for example, approximately 6,000, it is also possible to set the rotational speed Rm of the electric motor 11 to approximately 6,000.

Conventionally, when using an electric motor as the drive source of an electric tool, it is normally rotated at a high speed of approximately 25,000 RPM; in this regard, according to the third embodiment, it is enough to rotate the outer rotor type electric motor 11 at a very low-speed of approximately 6,000 RPM, so that it is possible to achieve a reduction in the wind noise and vibration of mainly the cooling fan 11e of the electric motor 11 and eventually to realize a reduction in the noise and vibration of the cutting tool 60.

Also in the third embodiment, the exemplified ratio α may be changed within a range of 0.5 to 2.0. The change in the ratio α can be made through a change in the number of teeth of the driving side pulley 41 and of the driven side pulley 42. Also by changing the ratio α within the range of 0.5 to 2.0, it is enough to rotate the outer rotor type electric motor 11 as the drive source at a much lower speed (Rm = 3,000 to 12,000 RPM) as compared with the prior art, so that it is possible to attain the same effect as the first and second embodiments in terms of a reduction in noise and vibration.

Further, also according to the third embodiment, it is possible to set the axis height D0 of the rotary cutter 12 to be smaller than the axis height D1 of the electric motor 11, so that it is possible to set a large maximum cutting depth for the cutting tool 60.

Next, Figs. 7 through 9 show a cutting tool 100 according to the fourth embodiment (not showing all features of claim 1). The cutting tool 100 is a so-called portable circular saw and is provided with a base 102 of a flat plate configuration for contacting with the upper surface of the workpiece W, and a tool main body 110 supported on the upper side of the base 102.

The tool main body 110 is provided with an electric motor 111 as the drive source, a speed reduction device 120 for reducing the rotational output of the electric motor 111, and a circular rotary cutter 112 mounted to a spindle 125 serving as an output shaft of the speed reduction device 120. The lower portion side of the rotary cutter 112 protrudes from the lower surface of the base 102, and this protruding portion cuts into the workpiece W for performing a cutting operation. By moving the cutting tool 100 in the cutting proceeding direction indicated by the outline arrow in the drawings, the rotary cutter 112 is brought to cut into the workpiece. In the following description, regarding the forward and rearward direction of the components or the constructions, the cutting proceeding direction will be referred to as the front side or the front portion, and the side opposite the direction will be referred to as the rear side or the rear portion. However, regarding the electric motor 111, the side of the rotary cutter 112 with respect to the motor axis J direction will be referred to as the front side or the front portion, and the side opposite the direction will be referred to as the rear side or the rear portion.

As shown in Fig. 9, as the electric motor 111, there is employed an electric motor which is a brushless motor and which is a so-called outer rotor type motor. This electric motor 111 is provided with a rotor 111c rotatably supported on the outer peripheral side of a stator 111b that is fixed in position within a motor case 111a. An output shaft 111d is mounted to this rotor 111c. The output shaft 111d is rotatably supported via bearings 111f and 111g. The rear portion side bearing 111f is mounted to the rear portion of the motor case 111a, and the front side bearing 111g is mounted to a speed reduction case 121.

The distance between the axis of the output shaft 111d of the electric motor 111 (the motor axis J) and the lower surface of the base 102 is determined as the motor axis height D1.

A cooling fan 111e for cooling the motor is mounted to the rear portion of this output shaft 111d. As shown in Fig. 10, around this cooling fan 111e and at the rear portion of the motor case 111a, there are provided a number of exhaust holes (air windows) 111h. On the other hand, as shown in Fig. 8, intake holes 121a are provided in the rear surface of the speed reduction case 121 of the speed reduction device 120 that will be described later. When the electric motor 11 is started to rotate the cooling fan 111e, external air is introduced via the intake holes 121a. The introduced external air (cooling air) flows toward the rear portion of the motor via the intake holes 111n provided on the side of the stator 111b due to the wind force thereof, thereby cooling the electric motor. The cooling air flows toward the side of the rear portion of the motor via air communication holes 111m provided at the bottom of the rotor 111c and is discharged to the exterior through the exhaust holes 111h.

The front end side of the output shaft 111d of the electric motor 111 protrudes out of the motor case 111a and enters the speed reduction device 120. The speed reduction device 120 is interposed between the electric motor 111 and a blade case 114 covering substantially half the circumference on the upper side of the rotary cutter 112.

The speed reduction device 120 is provided with a gear mesh-engagement type speed reduction mechanism, and includes a driving side gear 122 and a driven side gear 123 disposed within the speed reduction case 121. The driving side gear 122 is mounted to the output shaft 111d of the electric motor 111. The driven gear 123 in mesh with the driving side gear 122 is mounted to a spindle 125. The front end side of the spindle 125 protrudes into the blade case 114, and the rotary cutter 112 is mounted to this protruding portion in the state of being clamped between a reception flange 126 and a presser flange 127. The spindle 125 is rotatably supported by the speed reduction case 121 via bearings 125a and 125b.

The number of teeth Z of the driving side gear 122 is 17, and the number of teeth Z of the driven side gear 123 is 52, with the speed reduction ratio (number-of-teeth ratio) thereof being set to approximately 3.0. Thus, the rotary cutter 112 rotates at a rotational speed of approximately 3,000 RPM.

It is also possible to set the rotational speed of the electric motor 111 to approximately 15,000, to set the number of teeth Z of the driving side gear 122 to 9, to set the number of teeth Z of the driven side gear 123 to 47 for setting the speed reduction ratio to approximately 5.2, so that the rotational speed of the rotary cutter 112 is set to approximately 2,900 RPM. Through the former setting, it is possible to achieve a reduction in noise for the electric motor 111, and, through the latter setting, it is possible to achieve an enhancement in output.

The rotary cutter 112 rotates counterclockwise as seen from the front side. On the front side of the blade case 114, the rotational direction of the rotary cutter 112 is indicated by arrow 114a.

In the speed reduction device 120, spur gears are employed as the driving side gear 122 and the driven side gear 123, and the spindle 125 and the output shaft 111d of the electric motor 111 are supported parallel to each other. In addition, the spindle 125 is supported on the lower side of the output shaft 111d of the electric motor 111 at a position nearer to the side of the base 102 by the dimension (D1-DO). Thus, the spindle 125 is arranged at a position lower than the axis height D1 of the so-called direct type motor by the distance (D1-D0), so that the axial height D0 of the rotary cutter 112 is set to be small.

As shown in the drawing, with the cutting depth of the rotary cutter 112 with respect to the workpiece W being set to maximum, the axis height D0 of the rotary cutter 112 corresponds to the distance between the rotation center of the rotary cutter 112, i.e., the axis of the spindle 125 (the spindle axis S), and the lower surface of the base 102 (the upper surface of the workpiece W).

The tool main body 110 is supported on the upper side of the base 102 via the front side tilting support shaft 115 so as to be vertically tiltable. By changing the vertical tilting position of the tool main body 110 with respect to the base 102, it is possible to change the protruding dimension of the rotary cutter 112 toward the lower surface side of the base 102, whereby it is possible to adjust the cutting depth of the rotary cutter 112 into the workpiece W. As shown in Fig. 8, the rear portion side of the tool main body 110 is supported by the base 102 via a guide member 103 having a curved configuration and referred to as a depth guide, which is mounted to the upper portion of the base 102 in an uprise state. As shown in Fig. 10, the guide member 103 is provided with an elongated guide hole 103a having a curved and elongated configuration and extending along the longitudinal direction thereof. By fastening a fixing screw 104 inserted into the guide hole 103a of the guide member 103 into the rear surface side of the blade case 114, the tilting position of the tool main body 110 with respect to the base 102 is fixed. The fixing screw 104 can be fastened by rotating an operation lever 105 mounted to the back surface side end portion thereof. When the fixing screw 104 is loosened through rotation of the operation lever 105, the tool main body 110 is allowed to vertically tilt with respect to the base 102, whereby it is possible to change the cutting depth of the rotary cutter 112.

Substantially half the circumference on the lower side of the rotary cutter 112 protruding toward the lower surface side of the base 102 is covered with a movable cover 116. This movable cover 116 is supported by the blade case 114 so as to be rotatable around the rotary cutter 112. As shown in Fig. 7, the forward end portion of this movable cover 116 may contact the workpiece W, and, in this contact state, the cutting tool 100 is moved in the cutting proceeding direction indicated by the outline arrow in the drawing, so that the rotary cutter 112 cuts into the workpiece W, whereby the movable cover 116 is gradually opened. A grip 117 is mounted to the rear portion of the movable cover 116. By grasping this grip 117, the user can rotate the movable cover 116 in the opening direction, so that an operation such as the replacement of the rotary cutter 112 can be conveniently performed.

A handle portion 130 is provided near the connection portion between the electric motor 111 and the speed reduction device 120. As shown in Fig. 10, the handle portion 130 has a chevron-shaped loop configuration extending from the upper portion to the rear portion of the electric motor 111; the handle portion 130 includes an uprise portion 131 rising upwardly from the upper portion of the electric motor 111, a main grip portion 132 extending downwardly in the rearward direction from the upper portion of the uprise portion 131, and a connection portion 133 connecting the rear portion of the main grip portion 132 to the rear portion of the electric motor 111. The main grip portion 133 is a portion adapted to be grasped by one hand of the user, and a switch lever 135 is arranged on the lower surface side thereof. On the upper part of the uprise portion 131, a front grip portion 134 adapted to be grasped by the other hand of the user is provided so as to protrude forwards.

A battery mounting base portion 136 is provided at the rear portion of the main grip portion 132. A battery pack B is attached to the battery mounting base portion 136. The battery pack B can be slid upwards to be detached from the battery mounting base portion 136; conversely, it can be slid downwards to be mounted to the battery mounting base portion 136. The detached battery pack B can be repeatedly used through recharging by a charger separately prepared. The electric motor 111 is started by using the battery pack B as the power source.

At the front portion of the electric motor 111, there is provided a lock lever 137 for locking the rotation of the output shaft 111d thereof. When this lock lever 137 is moved in the longitudinal direction thereof, the rotation of the output shaft 111d is locked, so that an operation such as the replacement of the rotary cutter 112 can be conveniently performed.

As shown in Fig. 9, with the cutting depth of the rotary cutter 112 being set to maximum, the ratio of the overall height dimension H between the apex portion of the handle portion 130 and the lower end portion of the movable cover 116 to the overall width dimension L in the motor axis J direction of the cutting tool 100, (H/L), is set to approximately 1.6.

Further, the distance L1 in the motor axis J direction between the handle portion 130 and the rotary cutter 112 is set to approximately 30 percent of the diameter d112 of the rotary cutter 112.

With the fourth embodiment configured as described above, the rotational output of the electric motor 111 is reduced by the speed reduction device 120 before being output to the spindle 125. The spindle 125, which is the output shaft of the speed reduction device 120, is arranged on the lower side of the output shaft 111d of the electric motor 111 serving as the input shaft by an axis-to-axis distance D1 and at a position close to the base 102 so as to be parallel to the output shaft.

The spindle 125 is arranged on the side of the base 102 (lower side) of the motor output shaft 111d, and the axis height D0 of the rotary cutter 112 is smaller than that in the so-called direct drive system. Thus, as compared with the direct drive system (the system with no speed reduction), in which the rotary cutter is directly mounted to the output shaft of the electric motor, or in which the rotary cutter is mounted to the spindle arranged coaxially thereto, it is possible to set a larger cutting depth of the rotary cutter 112 with respect to the workpiece W.

Further, in the cutting tool 100 according to the fourth embodiment, there is provided the outer rotor type electric motor 111 as the drive source, so that it possible for its machine length L0 to be smaller (thinner) as compared with that in the case where the inner rotor type electric motor is used as the drive source. Since the machine length L0 of the electric motor 111 is smaller, the center of gravity position in the motor axis J direction of the cutting tool 100 is located closer to side of the rotary cutter 102. In the case of the fourth embodiment, the position in the motor axis J direction of the handle portion 130 is set in conformity with the center of gravity position in the same direction. Thus, the position in the motor axis J direction of the handle portion 130 is set to a position closer to the side of the rotary cutter 112, and, in the case of the present embodiment, the distance between them is set to L1. In the fourth embodiment, the distance L1 between the handle portion 130 and the rotary cutter 112 is set to approximately 63 mm, which is smaller than the distance of approximately 73 mm in the case where the inner rotor type electric motor is used as the drive source.

Further, the distance L1 in the motor axis J direction between the handle portion 130 and the rotary cutter 112 is set to approximately 30 percent of the diameter d112 of the rotary cutter 112. In this way, also by setting the distance L to be small by using the size of the rotary cutter 112 as the reference, it is possible to set the center of gravity position in the motor axis J direction of the cutting tool 100 to a position nearer to the side of the rotary cutter 112, whereby it is possible to enhance the workability (operability) and ease of handling (portability) of the cutting tool 100.

In this way, as compared with the case where the inner rotor type motor is used as the drive source, it is possible to reduce the machine length L0 of the electric motor 111 for bringing the gravity center position in the same direction of the cutting tool 100 to be closer to the rotary cutter 112, whereby it possible to bring the handle portion 130 to be aligned with the gravity center position. The center of gravity of the cutting tool 100 is situated on the lower side of the handle portion 130, so that, when the user grasps the main grip portion 132 of the handle portion 130 to carry about the cutting tool 100 or to move it to perform the cutting operation, it is possible for the user to easily carry about the tool without need of applying any excessive force to the grasping hand and to easily move the tool to perform the cutting operation without putting any burden on the grasping hand.

In the case of the fourth embodiment, the battery pack B of a relatively large weight is attached to the rear portion of the handle portion 130, and therefore, by bringing the center of gravity of the cutting tool 100 to be aligned with a position on the lower side of the handle portion 130, it is possible to attain a particularly great effect.

Further, since the handle portion 130 is arranged at a position closer to the rotary cutter 112, a force of pushing the cutting tool 100 in the cutting proceeding direction can be efficiently applied to the rotary cutter 112, whereby it is possible to reduce the burden on the hand of the user, thereby enhancing the operability or workability of the cutting tool 100. In particular, in the case of the fourth embodiment, with the cutting depth of the rotary cutter 112 being set to maximum, the ratio of the overall width dimension H between the apex of the handle portion 130 and the lower end portion of the movable cover 116 to the overall width dimension L in the motor axis J direction, (H/L), is set to approximately 1.6, so that the overall width dimension L in the motor axis J direction is set to be very small with respect to the overall height dimension H, whereby the cutting tool 100 is made compact in the motor axis J direction. By setting the above-mentioned ratio (H/L) to not less than 1.1, it is possible to position the gravity center position in the motor axis J direction of the cutting tool 100 closer to the side of the rotary cutter 112, whereby it is possible to enhance the workability (operability) and ease of handling (portability) of the cutting tool 100.

By achieving a reduction in size in the motor axis J direction of the cutting tool 100 from the various viewpoints mentioned above, it is possible to arrange the position in the motor axis J direction of the handle portion 130 on the side of the rotary cutter 112 of the center of the overall width dimension, whereby it is possible to attain the above-mentioned effect.

The fourth embodiment described above may be modified in various ways. For example, while the above example employs, as the speed reduction device for reducing the rotational output of the electric motor 111 before outputting it to the spindle 125, the gear mesh-engagement type speed reduction device 120 based on mesh-engagement between the driving side gear 122 and the driven side gear 123, it is also possible to change it to a belt transmission type speed reduction device 140 as shown in Fig. 11. Except for the speed reduction device 140, this modification is the same as the cutting tool 100 according to the fourth embodiment described above, so the same components are labeled with the same reference numerals and a description thereof will be left out. In Fig. 11, some of the components such as the front grip 134 and the battery pack B are omitted.

The speed reduction device 140 according to the fifth embodiment is provided with a driving side pulley 141 mounted to the output shaft 111d of the electric motor 111, a driven side pulley 142 mounted to the spindle 125, and a transmission belt 143 stretched between the driving side pulley 141 and the driven side pulley 142. The driven side pulley 142 used is of larger diameter than the driving side pulley 141, whereby the speed reduction device 140 is set to an appropriate speed reduction ratio. As in the fourth embodiment, an outer rotor type electric motor is employed as the electric motor 111.

With a cutting tool 101 according to the fifth embodiment (not showing all features of claim 1), the rotational output of the electric motor 111 is reduced by the speed reduction device 140 before being output. The axis height D0 of the spindle 125, which is the output shaft of the speed reduction device 140, can be set to be lower than the axis height D1 of the output shaft 111d of the electric motor 111 by a dimension (D1-D0), whereby it is possible to secure a large cutting depth of the rotary cutter 112 with respect to the workpiece W.

Further, due to the use of the outer rotor type electric motor 111, whose machine length L0 is compact, as the drive source, it is possible to make the size of the cutting tool 101 in the motor length direction compact, whereby it is possible to bring the gravity center position thereof to be aligned with a position on the lower side of the handle portion 130, and it is possible to arrange the handle portion 130 at a position near the rotary cutter 112 at the distance L1 therefrom, thereby attaining the same effect as that of the fourth embodiment.

Next, Figs. 12 through 14 show a cutting tool 200 according to the sixth embodiment. This cutting tool 200 is a so-called portable circular saw and is provided with a base 202 of a flat plate configuration for contacting with the upper surface of the workpiece W, and a tool main body 210 supported on the upper side of the base 202.

The tool main body 210 is provided with an electric motor 211 as the drive source, and a circular rotary cutter 212 directly mounted to an output shaft 211d of the electric motor 211. The lower portion side of the rotary cutter 212 protrudes from the lower surface of the base 202, and this protruding portion cuts into the workpiece W for performing a cutting operation. By moving the cutting tool 200 in the cutting proceeding direction indicated by the outline arrow in the drawings, the rotary cutter 212 is brought to cut into the workpiece W. In the following description, regarding the forward and rearward direction of the components or the constructions, the cutting proceeding direction will be referred to as the front side or the front portion, and the side opposite the direction will be referred to as the rear side or the rear portion. However, regarding the electric motor 211, the side of the rotary cutter 212 with respect to the motor axis J direction will be referred to as the front side or the front portion, and the side opposite the direction will be referred to as the rear side or the rear portion.

As shown in Fig. 14, as the electric motor 211, there is employed an electric motor which is a brushless motor and which is a so-called outer rotor type motor. This electric motor 211 is provided with a rotor 211c rotatably supported on the outer peripheral side of a stator 211b that is fixed in position within a motor case 211a. This rotor 211c is of a cup-like shape having a U-shaped sectional configuration and is arranged with a bottom portion 211k thereof positioned on the rear side and with an opening side thereof positioned on the front side. The rotor 211c is integrated with the output shaft 211d via the bottom portion 211k.

A cooling fan 211e for cooling the motor is mounted to the rear portion of the output shaft 211d. The cooling fan 211e extends along the rear surface side of the bottom portion 211k, and is integrated with the output shaft 211d. A plurality of air communication holes 211m are provided in the bottom portion 211k of the rotor 211c. Further, also on the stator 211b side, there are provided air communication holes 211n. The cooling air produced by the rotation of the cooling fan 211e and flown into the rotor 211c via the air communication holes 211n on the motor front portion side may flow to the rear portion side of the motor case 211a via the air communication holes 211m.

A number of exhaust holes (air windows) 211h are provided around the cooling fan 211e and in the peripheral surface on the side of the rear portion (side portion) of the motor case 211a. As shown in Fig. 15, in the case of the sixth embodiment, a plurality of exhaust holes 211i are also provided in the rear surface of the motor case 211a. On the other hand, as shown in Fig. 13, a plurality of intake holes 214c are provided in a motor mounting base portion 214b provided on the rear surface side of a blade case 214. When the electric motor 211 starts to rotate the cooling fan 211e, external air is introduced into the motor case 211a via the intake holes 214c. The introduced external air (cooling air) flows toward the side of the rear portion by the rotation of the cooling fan 211e to thereby cool the stator 211b and the rotor 211c. The motor cooling air flown toward the side of the rear portion of the motor case 211a is discharged to the exterior via the exhaust holes 211h and 211i. Through the rotation of the cooling fan 211e, the cooling air is efficiently discharge to the exterior of the motor case 211a via the exhaust holes 211i on the rear surface side and the exhaust holes 211h of the peripheral surface.

The output shaft 211d to which the rotor 211c and the cooling fan 211e are mounted is rotatably supported via bearings 211f and 211g. The rear portion side bearing 211fis mounted to the rear portion of the motor case 211a, and the front side bearing 211g is mounted to the motor mounting base portion 214b.

The front end side of the output shaft 211d of the electric motor 211 protrudes out of the motor case 211a to enter the blade case 214. The rotary cutter 212 is directly mounted to the front end of the output shaft 211d protruding into the blade case 214. The rotary cutter 212 is firmly mounted to the distal end of the output shaft 211d in the state of being clamped between a reception flange 226 and a presser flange 227.

Therefore, the cutting tool 200 according to the sixth embodiment is a direct drive type cutting tool, and the rotary cutter 212 rotates integrally at the same rotational speed as the electric motor 211. In the sixth embodiment, the rotational speed Rm of the electric motor is set to approximately 6,000 RPM. Thus, the rotational speed Rc of the rotary cutter 212 is set to be the same as the rotational speed Rm of the electric motor 211, i.e., to approximately 6,000 RPM.

The rotary cutter 212 rotates counterclockwise as seen from the front side. On the front side of the blade case 214, the rotational direction of the rotary cutter 212 is indicated by arrow 214a.

The tool main body 210 is supported on the upper side of the base 202 via a front side tilting support shaft 215 so as to be vertically tiltable. By changing the vertical tilting position of the tool main body 210 with respect to the base 202, it is possible to change the dimension by which the rotary cutter 212 protrudes toward the lower surface side of the base 202, whereby it is possible to adjust the cutting depth of the rotary cutter 212 with respect to the workpiece W.

As shown in Fig. 13, the rear portion side of the tool main body 210 is supported by the base 202 via a guide member 203 having a curved configuration and referred to as a depth guide, which is mounted to the upper portion of the base 202 in an uprise state. By fastening a fixing screw 204 inserted into a guide hole 203a of the guide member 203 to the rear surface side of the blade case 214, the tilting position of the tool main body 210 with respect to the base 202 is fixed. The fixing screw 204 can be fastened by rotating in the fastening direction an operation lever 205 mounted to the back surface side end portion thereof. When the fixing screw 204 is loosened through rotation of the operation lever 205, the tool main body 210 becomes vertically tiltable with respect to the base 202, whereby it is possible to change the cutting depth of the rotary cutter 212.

Substantially half the circumference on the lower side of the rotary cutter 212 protruding toward the lower surface side of the base 202 is covered with a movable cover 216. This movable cover 216 is supported by the blade case 214 so as to be rotatable around the rotary cutter 212. As shown in Fig. 12, the forward end portion of this movable cover 216 may contact the workpiece W, and, in this contact state, the cutting tool 200 is moved in the cutting proceeding direction indicated by the outline arrow in the drawing, so that the rotary cutter 212 cuts into the workpiece W, whereby the movable cover 216 is gradually opened. A grip 217 is mounted to the rear portion of the movable cover 116. By grasping this grip 217, the user can rotate the movable cover 216 in the opening direction, so that an operation such as the replacement of the rotary cutter 112 can be conveniently performed.

A handle portion 230 is provided on the upper portion of the electric motor 211. As shown in Fig. 15, this handle portion 230 is of a chevron-loop-shaped configuration extending from the upper portion to the rear portion of the electric motor 211, and has an uprise portion 231 rising upwardly from the upper portion of the electric motor 211, a main grip portion 232 extending downwardly in the rearward direction from the upper portion of the uprise portion 231, and a connection portion 233 connecting the rear portion of the main grip portion 232 to the rear portion of the electric motor 211. The main grip portion 233 is a portion adapted to be grasped by one hand of the user, and a switch lever 235 is arranged on the lower surface side thereof. On the upper part of the uprise portion 231, a front grip portion 234 adapted to be grasped by the other hand of the user is provided so as to protrude forwards.

A battery mounting base portion 236 is provided at the rear portion of the main grip portion 232. A battery pack B is attached to this battery mounting base portion 236. The battery pack B can be slid upwards to be detached from the battery mounting base portion 236; conversely, it can be slid downwards to be mounted to the battery mounting base portion 236. The detached battery pack B can be repeatedly used through recharging by a charger separately prepared. The electric motor 211 is started by using this battery pack B as the power source.

As shown in Fig. 15, inside the connection portion 233 of the handle portion 230, there is accommodated a circuit board 240 for performing an operational control on the electric motor 211. In the sixth embodiment, there is accommodated, as the circuit board 240, a circuit board having a flat plate shape for an operational control. Since the connection portion 233 is not a portion to be grasped by the user, it has a flattened configuration with a broader width as compared with the main grip portion 232, and can accommodate the circuit board 240 of a flat plate configuration.

Further, as shown in Fig. 15, a plurality of intake holes 241 are provided in both lateral side portions of the connection portion 233. The interior of the connection portion 233 communicates with the interior of the motor case 211a via an air communication passage. Thus, when the motor is started to rotate the cooling fan 211e as described above, external air is introduced not only through the intake holes 214c of the motor mounting base portion 214b, but also through the intake holes 241 on the side of the connection portion 233. External air introduced through the intake holes 241 flows into the motor case 211a via the above-mentioned air communication passage, and thereafter, it is discharged from the rear portion of the motor case 211a, whereby it is possible to cool the circuit board 240 in addition to the stator 211b and the rotor 211c.

At the front portion of the electric motor 211, there is provided a lock lever 237 for locking the rotation of the output shaft 211d thereof. When this lock lever 237 is moved in the longitudinal direction thereof, the rotation of the output shaft 211d is locked, so that an operation such as the replacement of the rotary cutter 212 can be conveniently performed.

According to the sixth embodiment constructed as described above, the rotary cutter 212 is rotated by using the outer rotor type electric motor 211 as the drive source. By employing the outer rotor type electric motor 211 as the drive source, it is possible to achieve a reduction in the motor axis J direction of the electric motor 211 (the left and right direction as seen in Fig. 14) to approximately the same degree as in the case where an inner rotor type brushless motor is used as the drive source.

Further, in the cutting tool 200 according to the sixth embodiment, the cooling fan 211e is provided on the output shaft 211d of the outer rotor type electric motor 211. Therefore, when the electric motor 211 is started, this cooling fan 211e rotates together to cool the electric motor 211, whereby it is possible to operate the electric motor 211 and eventually the cutting tool 200 reliably in a stable manner, and to achieve an improvement in terms of the durability thereof.

Further, according to the sixth embodiment, there is provided the cup-shaped rotor 211c having a U-shaped sectional configuration with the rear portion side thereof closed, and the cooling fan 211e is mounted so as to extend along the bottom portion 211k thereof. Thus, it is possible to mount the cooling fan 211e by utilizing the closed side of the rotor 211c, whereby it is possible to simplify the mounting structure of the cooling fan 211e and the assembling operation thereof.

Further, the cooling fan 211e is arranged on the rear side of the stator 211b, and air is discharged through the exhaust holes 211h and 211i provided in the rear portion of the motor case 211a, so that it is possible to mitigate the direct blowing of exhaust air against the hand of the user grasping the handle portion 230 provided on the front portion side of the motor case 211a, whereby it is possible to improve the cutting tool 200 in terms of operability and usability.

Further, in the sixth embodiment, the circuit board 240 is accommodated in the connection portion 233 of the handle portion 230, and the circuit board 240 is also cooled by the cooling fan 211e. This also helps to operate the electric motor 211 and eventually the cutting tool 200 reliably in a stable manner, and to enhance the durability thereof.

In this way, the connection portion 233 of the handle portion 230 provided at a position relatively close to the electric motor 211 is effectively utilized for accommodating the circuit board 240 therein; further, by providing the intake holes 241 in the connection portion 233, it is possible to cool the circuit board 240 by the cooling fan 211e along with the electric motor 211.

The sixth embodiment described above may be modified in various ways. For example, Fig. 16 shows a cutting tool 201 according to the seventh embodiment (not showing all features of claim 1). The seventh embodiment differs from the sixth embodiment in the orientation of the rotor 211c and the position of a cooling fan 211j. The components and the constructions that are the same as those of the sixth embodiment are labeled with the same reference numerals, and a description thereof will be omitted.

In the case of the seventh embodiment, the rotor 211c is supported in an orientation reversed from that of the sixth embodiment in the forward and rearward direction with respect to the orientation in the motor axis direction. Thus, the bottom portion 211k of the rotor 211c is situated on the front side, and the opening side thereof is situated on the rear side. The cooling fan 211j is mounted to the output shaft 211d so as to extend along the bottom portion 211k situated on the front side. The rotor 211c and the cooling fan 211j are fixed to the output shaft 211d so as to respectively rotate together with the output shaft 211d. As in the sixth embodiment, a plurality of air communication holes 211m are provided in the bottom portion 211k of the rotor 211c.

In the seventh embodiment, constructed as described above, the exhaust holes 211h and 211j, which are provided in the rear portion of the motor case 211a in the sixth embodiment, function as intake holes, and the intake holes 214c in the sixth embodiment function as exhaust holes. In the following, regarding the seventh embodiment, the terms intake holes 211i and exhaust holes 214c will be used. As in the sixth embodiment, the intake holes 241 provided in the connection portion 233 of the handle portion 230 serve as the intake holes. In Fig. 16, the illustration of the intake holes 211i, the exhaust holes 214c, and the intake holes 241 is omitted.

Due to the arrangement of the cooling fan 211j on the front side of the electric motor 211, the exhaust holes 214c are situated in the periphery thereof. Thus, when the cooling fan 211j rotates, external air is introduced via the intake holes 211h and 211i in the motor rear portion. The introduced external air (cooling air) cools the stator 211b and the rotor 211c before being discharged to the exterior via the exhaust holes 214c of the motor mounting base portion 214b. Further, as the cooling fan 211j rotates, external air is also introduced via the intake holes 241 provided in the connection portion 233 of the handle portion 230, thereby cooling the circuit board 240. The cooling air used to cool the circuit board 240 is also discharged to the exterior via the exhaust holes 214c through the air communication passage.

Thus, also with the construction of the seventh embodiment, the cooling of the electric motor 211 and its circuit board 240 is effected efficiently, whereby it is possible to realize a stable operation of the cutting tool 201 and to enhance the durability thereof.

Further, in the case of the seventh embodiment, the cooling fan 211j is arranged at the front portion of the electric motor 211, so that the center of gravity in the motor axis J direction of the electric motor 211 can be situated further on the front side than in the sixth embodiment, in which it is arranged on the rear portion side, whereby it is possible to set the gravity center position to a position near the rotary cutter 212. By setting the gravity center position in the motor axis J direction of the electric motor 211 to a position near the rotary cutter 212, it is possible to improve the operability and workability of the cutting tool 201 during the cutting operation; in addition, by the positioning of the gravity center position at a position on the lower side of the handle portion 230, it is possible for the cutting tool to be well-balanced in weight when it is being carried about, thus improving each of handling and portability of the cutting tool 201.

Fig. 17 shows a cutting tool 206 according to the eighth embodiment. This eighth embodiment differs from the sixth embodiment described above in that the circuit board 242 for controlling the operation of the electric motor 211 is accommodated in the uprise portion 231 of the handle portion 230, and that a plurality of intake holes 243 are provided in the uprise portion 231. The components and the constructions that are the same as those of the sixth embodiment are labeled with the same reference numerals, and a description thereof will be omitted.

The interior of the uprise portion 231 communicates with the interior of the motor case 211a via the air communication passage. Therefore, when the motor is started to rotate the cooling fan 211e, external air is introduced not only through the intake holes 214c of the motor mounting base portion 214b but also through the intake hoses 243 on the side of the uprise portion 231, and the external air flows into the motor case 211a via the air communication passage before being discharged from the rear portion of the motor case 211a, so that, as in the sixth embodiment, the circuit board 242 is cooled along with the stator 211b and the rotor 211c.

Next, Figs. 18 through 20 show a cutting tool 300 according to the ninth embodiment (not showing all features of claim 1). The cutting tool 300 is a so-called portable circular saw and is provided with a base 302 of a flat plate configuration for contacting with the upper surface of the workpiece W, and a tool main body 310 supported on the upper side of the base 302.

The tool main body 310 is provided with an electric motor 311 as the drive source, and a circular rotary cutter 312 directly mounted to an output shaft 311d of the electric motor 311. In the ninth embodiment, a speed reduction mechanism such as a gear train for reducing the rotational output of the electric motor 11 is omitted.

The lower portion side of the rotary cutter 312 protrudes from the lower surface of the base 302, and this protruding portion cuts into the workpiece W for performing a cutting operation. By moving the cutting tool 300 in the cutting proceeding direction indicated by the outline arrow in the drawings, the rotary cutter 312 is brought to cut into the workpiece. In the following description, with respect to the forward and rearward direction of the components or the constructions, the direction in which cutting operation proceeds will be referred to as the front side or the front portion, and the side opposite the same will be referred to as the rear side or the rear portion. However, regarding the electric motor 311, the side of the rotary cutter 312 with respect to the motor axis direction J will be referred to as the front side or the front portion, and the side opposite the same will be referred to as the rear side or the rear portion.

As shown in Fig. 20, as the electric motor 311, there is employed an electric motor which is a brushless motor and which is a so-called outer rotor type motor. In general, the outer rotor type brushless motor has, on the outer side of the motor, a rotor including permanent magnets including N-poles and S-poles, and, on the inner side of the motor, a stator constituted by a three-phase stator winding. In contrast, the ordinary inner rotor type brushless motor, which has a stator on the outer peripheral side of the motor, has, on the inner side of the motor, a rotor including permanent magnets including N-poles and S-poles, and, on the inner side of the motor, a stator constituted by a three-phase stator winding.

Here, when comparison is made between an outer rotor type brushless motor and an inner rotor type brushless motor which are of the same motor size inclusive of the rotor and the stator, the magnets mounted to the outer rotor may have a larger surface area than the magnets mounted to the inner rotor, so that it is possible for the outer rotor type brushless motor to provide a larger torque. For this reason, the outer rotor type brushless motor may be reduced in size as compared with the inner rotor type brushless motor without accompanying an increase in torque (i.e., with the torque remaining the same); otherwise, the outer rotor type brushless motor may provide lower rotation-higher torque as compared with the inner rotor type one if no reduction in size is effected and they are of equivalent size.

The electric motor 311 is provided with a rotor 311 c rotatably supported on the outer peripheral side of a stator 311b that is fixed in position within a motor case 311a. An output shaft 311d is mounted to the rotor 311c. The output shaft 311d is rotatably supported via bearings 311f and 311g. The rear portion side bearing 311f is mounted to the rear portion of the motor case 311a, and the front side bearing 311g is mounted to a motor mounting base portion 314b provided on the back surface side of a blade case 314.

A cooling fan 311e for cooling the motor is mounted to the rear portion of the output shaft 311d. A number of exhaust holes (air windows) 311h are provided around the cooling fan 311e and at the rear portion of the motor case 311a. On the other hand, as shown in Fig. 19, intake holes 314c are provided in the rear surface of the motor mounting base portion 314b. When the electric motor 311 is started to rotate the cooling fan 311e, external air is introduced through the intake holes 314c. The introduced external air (cooling air) flows toward the side of the rear portion of the motor due to the wind force thereof, whereby the electric motor 311 is cooled. The cooling air flown toward the side of the rear portion of the motor is discharged to the exterior via the exhaust holes 311h.

The length (machine length L0) in the axial direction J (the left and right direction as seen in Fig. 20) of the electric motor 311 is small approximately to the same degree as an inner rotor type brushless motor.

The front end side of the output shaft 311d of the electric motor 311 protrudes from the motor case 311a, and enters the blade case 314. The rotary cutter 312 is directly mounted to the front end of the output shaft 311d protruding into the blade case 314. The rotary cutter 312 is firmly mounted to the front end of the output shaft 311d in the state of being clamped between a reception flange 326 and a presser flange 327.

Thus, the cutting tool 300 according to the ninth embodiment is a direct drive type cutting tool, and the rotary cutter 312 rotates together at the same rotational speed as the electric motor 311. In the ninth embodiment, the rotational speed Rm of the electric motor 311 is set to approximately 6000 RPM. Thus, the rotational speed Rc of the rotary cutter 312 is set to the same rotational speed as the rotational speed Rm of the electric motor 311, i.e., to approximately 6,000 (Rm = Rc = approximately 6000 RPM).

As shown in Fig. 18, the rotary cutter 312 rotates counterclockwise as seen from the front side. On the front side of the blade case 314, the rotational direction of the rotary cutter 312 is indicated by arrow 314a.

The rotational speed of the rotary cutter 312 is set appropriately according to the diameter thereof, the material of the workpiece W, etc. For example, in the case where the workpiece W is wood, the rotational speed of the rotary cutter 312 (M) having a diameter of approximately 185 mm to 190 mm is preferably set to approximately 5,000 to 6,000 RPM; and, in the case where the workpiece W is metal, it is preferably set to approximately 3,000 to 4,000 RPM. In the case of a rotary cutter 312 (S) having a diameter of approximately 110 mm to 125 mm, it is preferable to set its rotational speed to approximately 7,000 to 9,000 RPM when the workpiece W is wood. Further, in the case of a rotary cutter 312 (L) having a diameter of approximately 210 mm to 235 mm, it is preferable to set its rotational speed to approximately 3,500 to 4,500 RPM when the workpiece W is wood.

The tool main body 310 is supported on the upper side of the base 302 via a front side tilting support shaft 315 so as to be vertically tiltable. By changing the vertical tilting position of the tool main body 310 with respect to the base 302, it is possible to change the dimension by which the rotary cutter 312 protrudes toward the lower surface side of the base 302, whereby it is possible to adjust the cutting depth of the rotary cutter 312 with respect to the workpiece W. As shown in Fig. 19, the rear portion side of the tool main body 310 is supported by the base 102 via a guide member 303 having a curved configuration and referred to as a depth guide, which is mounted to the upper portion of the base 302 in an uprise state. By fastening a fixing screw 304 inserted into a guide hole 303a of the guide member 303 into the rear surface side of the blade case 314, the tilting position of the tool main body 310 with respect to the base 302 is fixed. The fixing screw 304 can be fastened by rotating in the fastening direction an operation lever 305 mounted to the back surface side end portion thereof. When the fixing screw 304 is loosened through rotation of the operation lever 305, the tool main body 310 is allowed to vertically tilt with respect to the base 302, whereby it is possible to change the cutting depth of the rotary cutter 312.

Substantially half the circumference on the lower side of the rotary cutter 312 protruding toward the lower surface side of the base 302 is covered with a movable cover 316. This movable cover 316 is supported by the blade case 314 so as to be rotatable around the rotary cutter 312. As shown in Fig. 18, the forward end portion of this movable cover 316 may contact the workpiece W, and, in this contact state, the cutting tool 300 is moved in the cutting proceeding direction indicated by the outline arrow in the drawing, so that the rotary cutter 312 cuts into the workpiece W, whereby the movable cover 316 causes relative rotation in the clockwise direction in the drawing so as to be gradually opened. A grip 317 is mounted to the rear portion of the movable cover 316. By grasping this grip 317, the user can rotate the movable cover 316 in the opening direction, so that an operation such as the replacement of the rotary cutter 312 can be conveniently performed.

A handle portion 330 is provided on the upper portion of the electric motor 311. As shown in Fig. 21, the handle portion 330 is of a triangular-loop-shaped configuration extending from the upper portion to the rear portion of the electric motor 311, and has an uprise portion 331 uprise upwardly from the upper portion of the electric motor 311, a main grip portion 332 extending downwardly in the rearward direction from the upper portion of the uprise portion 331, and a connection portion 333 connecting the rear portion of the main grip portion 332 to the rear portion of the electric motor 311. The main grip portion 332 is a portion adapted to be grasped by one hand of the user, and a trigger type switch lever 335 to be pulled with a fingertip of the grasping hand of the user is arranged on the lower surface side thereof. On the upper part of the uprise portion 331, a front grip portion 334 adapted to be grasped by the other hand of the user is provided so as to protrude forwards.

A battery mounting base portion 336 is provided at the rear portion of the main grip portion 332. A battery pack B is attached to the battery mounting base portion 336. The battery pack B can be slid upwards to be detached from the battery mounting base portion 336; conversely, it can be slid downwards to be mounted to the battery mounting base portion 336. The detached battery pack B can be repeatedly used through recharging by a charger separately prepared. The electric motor 311 is started by using this battery pack B as the power source.

At the front portion of the electric motor 311, there is provided a lock lever 337 for locking the rotation of the output shaft 311d thereof. When this lock lever 337 is moved in the longitudinal direction thereof, the rotation of the output shaft 311d is locked, so that an operation such as the replacement of the rotary cutter 312 can be conveniently performed.

According to the ninth embodiment, constructed as described above, due to the provision of a direct drive system in which the rotary cutter 312 is directly mounted to the output shaft 311d of the electric motor 311, it is possible to achieve a reduction in the size in the motor axis J direction of the tool main body 310 by an amount corresponding to the conventional speed reduction system of the mesh-engagement type or the like.

Through the reduction in the size in the motor axis J direction of the tool main body 310, it is possible to bring the gravity center position in the motor axis J direction of the tool main body 310 and eventually of the cutting tool 300, closer to side of the rotary cutter 312, and to arrange the handle portion 330 at a position closer to the side of the rotary cutter 312, whereby it is possible to improve the operability during the cutting operation of the cutting tool; further, since the tool can be easily carried about while well-balanced in weight in the motor axis direction, it is possible to improve the workability (operability) and ease of handling (portability) of the cutting tool.

Further, since an outer rotor type brushless motor is employed as the electric motor 311, it is possible to reduce the machine length dimension L0 of the electric motor 311 itself, which also helps to set the gravity center position in the motor axis J direction of the cutting tool 300 and the position of the handle portion 330 closer to the side of the rotary cutter 312, whereby it is possible to enhance the workability (operability) and ease of handling (portability) of the cutting tool 300.

Further, due to the direct drive system, the rotary cutter 312 is directly mounted to the output shaft 311d of the electric motor 311, so that the rotational speed Rc of the rotary cutter 312 coincides with the rotational speed Rm of the electric motor 311. Thus, the rotational speed Rm of the electric motor 311 coincides with the proper rotational speed Rc of the rotary cutter 312, so that it is possible to effect rotation at a substantially lower speed as compared, for example, with the system (the speed reduction drive system) in which rotation is effected at approximately 6,000 RPM and in which speed reduction is effected by normally using a speed reduction gear train, whereby it is possible for the electric motor 311 to achieve a reduction mainly in the wind noise or the vibration of the cooling fan 311e and eventually a reduction in the noise and vibration of the cutting tool 300.

Further, due to the use of the brushless type electric motor 311, it is possible to enhance ease of maintenance of the electric motor 311 and eventually of the cutting tool 300, and to perform the operational control on the rotational speed, etc. of the electric motor 311 easier than in the case of the brush type motor.

Further due to the provision of an outer rotor type brushless motor as the electric motor 11, it is possible to realize lower speed rotation-higher torque of the electric motor 11 while maintaining the output and size thereof, whereby it is possible to achieve both an enhancement in motor power and a reduction in the wind noise and vibration of the electric motor 11 itself.

The ninth embodiment described above may be modified in various ways. For example, when the diameter of the rotary cutter is 185 mm to 190 mm, it is possible to rotate the rotary cutter at an appropriate rotational speed Rc by setting the rotational speed Rm of the electric motor to 5,000 to 6,000 RPM.

As described above, the suitable rotational speed Rc of the rotary cutter (= the rotational speed Rm of the electric motor) differs according such factors as the diameter of the rotary cutter and the material of the workpiece; in any case, however, due to the direct drive system, it is possible to make the tool main body 310 compact in the motor axis J direction, and to achieve a substantial reduction in the rotational speed Rm of the electric motor, whereby it is possible for the electric motor to achieve a reduction mainly in the wind noise or the vibration of the cooling fan and eventually a reduction in the noise and vibration of the cutting tool 1.

Further, while, as shown in Fig. 20, in the ninth embodiment, there is employed the outer rotor type electric motor 311 having the cooling fan 311e at the rear portion of the output shaft 311d, it is also possible, as shown in Fig. 22, to employ an electric motor 340 having a cooling fan 341 at the front portion of an output shaft 342. In the electric motor 340 according to the tenth embodiment (not showing all features of claim 1), the orientation of a rotor 343 and the position of the cooling fan 341 differ from those of the electric motor 311 according to the ninth embodiment. The present embodiment is the same as the ninth embodiment in that a direct drive system, in which the rotary cutter 312 is directly mounted to the output shaft 342 of the electric motor 340, is employed. The components and constructions that are the same as those of the ninth embodiment are labeled with the same reference numerals, and a description thereof will be left out.

In the case of the tenth embodiment, the rotor 343 is supported in an orientation reversed in the forward and rearward direction from that of the ninth embodiment with respect to the orientation in the motor axis J direction. Thus, the bottom portion 343a of the rotor 343 is situated on the front side, and the side of the opening thereof is situated on the rear side. The cooling fan 341 is mounted to the output shaft 342 so as to extend along the bottom portion 343a situated on the front side. The rotor 343 and the cooling fan 341 are fixed to the output shaft 342 and respectively rotate together with the output shaft 342. A plurality of air communication holes 343b are provided in the bottom portion 343a of the rotor 343.

In the electric motor 340 according to the tenth embodiment, external air is drawn through the intake holes provided in the rear portion of the motor case 344, and the rotor 343, the stator 345, etc. are cooled by the drawn external air (cooling air), and after that, the external air is discharged through the exhaust holes provided in the front portion of the motor case 344. In the drawing, the intake holes and the exhaust holes are omitted.

In the case of the tenth embodiment, the cooling fan 341 is arranged at the front portion of the electric motor 340, so that it is possible for the gravity center position in the motor axis J direction of the electric motor 340 to be situated nearer to the rotary cutter 312 than in the ninth embodiment, in which it is arranged on the side of the rear portion. By setting the gravity center position in the motor axis J direction of the electric motor 340 to a position near the rotary cutter 312, it is possible to improve the operability and workability of the cutting tool 301 during the cutting operation; further, by positioning the center gravity center position at a position on the lower side of the handle portion 330, it is possible for the cutting tool to be well-balanced in weight when it is being carried about, thus improving ease of handling and portability of the cutting tool 301.

The outer rotor type brushless motor (the electric motor 311, 340) is used as the drive source in the above embodiments described above, however, the same effect can be attained by applying the above direct drive system to the case where an inner rotor type brushless motor or an inner rotor type brush motor is used as the drive source.

Fig. 23 shows a cutting tool 306 according to the eleventh embodiment (not showing all features of claim 1) which is provided with an inner rotor type brushless motor (electric motor 350) as the drive source. The components or the constructions requiring no change are labeled with the same reference numerals, and a description thereof will be left out. The electric motor 350 is configured to have a rotor 353 rotatably supported on the inner peripheral side of an annular stator 352 fixed in position within a motor case 351. An output shaft 354 supporting the rotor 353 is supported by the motor case 351 via bearings 355 and 356 so as to be rotatable about the axis J. On the front side of the rotor 353, a cooling fan 357 is mounted onto the output shaft 354. The front side of the output shaft 354 protrudes into a blade case 314. A circular rotary cutter 312 is directly mounted to the front end of the output shaft 354 protruding into the blade case 314.

In this way, the eleventh embodiment employing the inner rotor type brushless motor as the drive source also incorporates a direct drive system, in which the rotary cutter 312 is directly mounted to the output shaft 354 of the electric motor 350, and the conventional speed reduction mechanism of the gear mesh-engagement type or the like is omitted. Thus, it is possible to achieve a reduction in the size in the motor axis J direction of the tool main body 310 by an amount corresponding to the speed reduction mechanism, so that it is possible to set the gravity center position in the same direction and the position of the handle portion 330 to positions nearer to the side of the rotary cutter 312, whereby it is possible to enhance the operability, workability, or ease of handling of the cutting tool 306.

Fig. 24 shows a cutting tool 307 according to the twelfth embodiment (not showing all features of claim 1) which is provided with an inner rotor type brush motor (electric motor 360) as the drive source. Also in the twelfth embodiment, the components or the constructions requiring no change are labeled with the same reference numerals, and a description thereof will be left out. The electric motor 360 is configured to have a rotor 363 rotatably supported on the inner peripheral side of an annular stator 362 fixed in position within a motor case 361. An output shaft 364 supporting the rotor 363 is supported by the motor case 361 via bearings 365 and 366 so as to be rotatable about the axis J. On the front side of the rotor 363, a cooling fan 367 is mounted onto the output shaft 364. The front side of the output shaft 364 protrudes into the blade case 314. The circular rotary cutter 312 is directly mounted to the front end of the output shaft 364 protruding into the blade case 314.

A commutator 368 is mounted on the rear portion of the output shaft 364 on the rear side of the rotor 363. Carbon brushes 369 are in slide contact with the commutator 368 from two lateral sides with respect to the axis J. The carbon brushes 369 can be replaced by detaching a cap 361a of the motor case 361.

In this way, also the twelfth embodiment employing the inner rotor type brush motor as the drive source incorporates the direct drive system, in which the rotary cutter 312 is directly mounted to the output shaft 364 of the electric motor 360, and the conventional speed reduction mechanism of the gear mesh-engagement type or the like is omitted. Thus, it is possible to achieve a reduction in the size in the motor axis J direction of the tool main body 310 by an amount corresponding to the speed reduction mechanism, so that it is possible to set the gravity center position in the same direction and the position of the handle portion 330 to positions nearer to the side of the rotary cutter 312, whereby it is possible to enhance the operability, etc. of the cutting tool 307.

Further, while the above-described embodiments incorporate the direct drive system, in which the rotary cutter 312 is directly mounted to the output shaft 311d (342, 354, 364) of the electric motor 311 (340, 350, 360), the term "direct drive system" means a system in which no speed changing means such as a speed reduction gear train is interposed; thus, the term also covers a construction in which the rotary cutter is mounted to a shaft (cutter shaft) which is physically separated from the output shaft of the electric motor but which is coaxial with the output shaft of the electric motor and integrated therewith in terms of rotation to rotate at the same rotational speed as the output shaft.

## Claims

1. A portable circular saw comprising
a base (202) for contacting with a workpiece,
a tool main body (210) supported on an upper side of the base (202), and a brushless electric motor (211) as a drive source for rotating a rotary cutter, comprising
a stator (211b) fixed to the tool main body (210),
a rotor (211c) rotatably supported by the tool main body (210)
wherein a fan (211e) for cooling the motor is mounted to an output shaft (211d) of the motor and is integrated with the output shaft (21 1d), and
wherein the circular saw is provided with a handle portion (230) to be grasped by the user, the handle portion (230) includes an uprise portion (231) uprising upwardly from an upper portion of the electric motor (211), a main grip portion (232) extending rearwards from an upper portion of the uprise portion (231), and a connection portion (233) connecting a rear portion of the main grip portion (232) to a rear portion of the electric motor (211),
wherein the portable circular saw further comprises a circuit board (240) configured to control an operation of the electric motor (211),
**characterised in that**:
the brushless electric motor (211) is an outer rotor type brushless electric motor, whereby the rotor (211c) is positioned on an outer peripheral side of the stator (211b),
**in that** on the stator (211b) side air communication holes (211n) are provided and air communication holes (211m) are provided in a bottom portion (211k) of the rotor (211c),
**in that** the fan (211e) extends along a rear side of the bottom portion (211k) of the rotor (211c), and **in that** either the circuit board (240) is accommodated within the connection portion (233), and the connection portion (233) is provided with an intake hole (241), and an air communication passage is formed to extend from the intake hole (241) to the electric motor (211), so that the circuit board (240) is cooled through rotation of the cooling fan (211e), or the circuit board (242) is accommodated within the uprise portion (231), and the uprise portion (231) is provided with an intake hole (243), and an air communication passage is formed to extend from the intake hole (243) to the electric motor (211), so that the circuit board (242) is cooled through rotation of the cooling fan (211e).

2. The portable circular saw according to claim 1, wherein
the output shaft (21 1d) is mounted to the rotor (21 1c), and
the rotary cutter (212) is mounted to the output shaft (211d).

3. The portable circular saw according to claim 1 or 2, wherein
a battery pack (B) is detachably attached to a battery mounting base portion (236) provided at a rear part of the main grip portion (232) of the handle portion (230), and
the circuit board (240; 242) is located between the stator (211b) and the battery (B).

4. The portable circular saw according to claim 3, wherein
the handle portion (230) is fixed to the main tool body (210), and
the circuit board (240; 242) is located on a lower side of the handle portion (230).

5. The portable circular saw according to anyone of claims 1 to 4, wherein:
the stator (211b) is located on an upper side of the base (202).

## Patentansprüche

1. Tragbare Kreissäge, mit
einer Basis (202) zum Berühren mit einem Werkstück,
einem Werkzeughauptkörper (210), der auf einer oberen Seite der Basis (202) gelagert ist, und
einem bürstenlosen elektrischen Motor (211) als eine Antriebsquelle zum Drehen einer drehenden Schneide, mit
einem Stator (211b), der an dem Hauptkörpergehäuse (210) fixiert ist,
einem Rotor (211c), der durch den Werkzeugkörper (210) drehbar gelagert ist,
bei dem ein Lüfterrad (211e) zum Kühlen des Motors auf eine Ausgabewelle (211d) des Motors montiert ist und mit der Ausgabewelle (211d) integriert ist, und
bei der die Kreissäge mit einem Handgriffbereich (230) vorgesehen ist, der durch einen Benutzer gegriffen wird, bei der der Handgriffbereich (230) einen hochstehenden Teil (231), der nach oben von einem oberen Bereich des elektrischen Motors (211) hochsteht, einen Hauptgriffbereich (232), der sich nach hinten von einem oberen Bereich des hochstehenden Bereichs (231) erstreckt, und einen Verbindungsbereich (233) aufweist, der einen hinteren Bereich des Hauptgriffbereiches (232) mit einem hinteren Bereich des elektrischen Motors (211) verbindet,
bei der die tragbare Kreissäge ferner eine Schaltplatine (240) aufweist, die zum Steuern eines Betriebs des elektrischen Motors (211) konfiguriert ist,
**dadurch gekennzeichnet, dass**
der bürstenlose elektrische Motor (211) ein bürstenloser elektrischer Motor des Außenrotortyps ist, bei dem der Rotor (211c) an einer Außenumfangsseite des Stators (211b) positioniert ist,
dass auf der Seite des Stators (211b) Luftverbindungslöcher (211n) vorgesehen sind und Luftverbindungslöcher (211m) in einem Bodenbereich (211k) des Rotors (211c) vorgesehen sind,
dass das Lüfterrad (211e) sich entlang einer hinteren Seite des Bodenbereiches (211k) des Rotors (211c) erstreckt, und
dass entweder die Schaltplatine (240) innerhalb des Verbindungsbereiches (233) aufgenommen ist und der Verbindungsbereich (233) mit einer Ansaugöffnung (241) vorgesehen ist, und eine Luftverbindungspassage derart ausgebildet ist, dass sie sich von dem Ansaugloch (241) zu dem elektrischen Motor (211) erstreckt, so dass die Schaltplatine (240) durch Drehung des Kühlungslüfterrades (211e) gekühlt wird,
oder
die Schaltplatine (242) innerhalb des hochstehenden Bereiches (231) aufgenommen ist, und der hochstehende Bereich (231) mit einer Ansaugöffnung (243) vorgesehen ist, und eine Luftverbindungspassage derart ausgebildet ist, dass sie sich von der Ansaugöffnung (243) zu dem elektrischen Motor (211) erstreckt, so dass die Schaltplatine (242) durch Drehung des Kühlungslüfterrades (211e) gekühlt wird.

2. Tragbare Kreissäge nach Anspruch 1, bei der
die Ausgabewelle (211d) an dem Rotor (211c) montiert ist, und
die drehende Schneide (212) auf die Ausgabewelle (211d) montiert ist.

3. Tragbare Kreissäge nach Anspruch 1 oder 2, bei der
ein Batteriepack (B) an einem Batteriemontagebasisbereich (236) entfernbar angebracht ist, der an einem hinteren Bereich des Hauptgriffbereiches (232) des Handgriffbereiches (230) vorgesehen ist, und
die Schaltplatine (240; 242) sich zwischen dem Stator (211b) und der Batterie (B) befindet.

4. Tragbare Kreissäge nach Anspruch 3, bei der
der Handgriffbereich (230) an den Hauptwerkzeugkörper (210) fixiert ist, und
die Schaltplatine (240; 242) sich an einer unteren Seite des Handgriffbereiches (230) befindet.

5. Tragbare Kreissäge nach einem der Ansprüche 1 bis 4, bei der
der Stator (211b) sich an einer oberen Seite der Basis (202) befindet.

## Revendications

1. Scie circulaire portative comprenant
une base (202) pour le contact avec une pièce à usiner,
un corps principal d'outil (210) supporté sur un côté supérieur de la base (202), et
un moteur électrique sans balai (211) en tant que source d'entraînement pour faire tourner une fraise rotative, comprenant
un stator (211b) fixé sur le corps principal d'outil (210),
un rotor (211c) supporté en rotation par le corps principal d'outil (210),
où un ventilateur (211e) pour refroidir le moteur est monté sur un arbre de sortie (211d) du moteur et est intégré à l'arbre de sortie (211d), et
où la scie circulaire est pourvue d'une partie de poignée (230) pouvant être saisie par l'utilisateur, la partie poignée (230) comprend une partie de soulèvement (231) soulevant vers le haut à partir d'une partie supérieure du moteur électrique (211), une partie de prise principale (232) s'étendant vers l'arrière à partir d'une partie supérieure de la partie de soulèvement (231), et une partie de connexion (233) connectant une partie arrière de la partie de prise principale (232) à une partie arrière du moteur électrique (211),
où la scie circulaire portative comprend en outre une carte de circuit imprimé (240) configurée pour commander un fonctionnement du moteur électrique (211), **caractérisé en ce que** :
le moteur électrique sans balais (211) est un moteur électrique sans balais de type rotor extérieur, où le rotor (211c) est positionné sur un côté périphérique extérieur du stator (211b),
**en ce que** sur le stator (211b) sont prévus des trous de communication d'air latéraux (211n) et des trous de communication (211m) sont prévus dans une partie inférieure (211k) du rotor (211c),
**en ce que** le ventilateur (211e) s'étend le long d'un côté arrière de la partie inférieure (211k) du rotor (211c),
et **en ce que** soit le carte de circuit imprimé (240) est logée à l'intérieur de la partie de connexion (233), et la partie de connexion (233) est pourvue avec un trou d'admission (241), et un passage de communication d'air est formé pour s'étendre du trou d'admission (241) vers le moteur électrique (211), de sorte que la carte de circuit imprimé (240) est refroidie par la rotation du ventilateur de refroidissement (211e),
ou la carte de circuit imprimé (242) est logée dans la partie de soulèvement (231), et la partie de soulèvement (231) est pourvue d'un trou d'admission (243), et un passage de communication d'air est formé pour s'étendre à partir du trou d'admission (243) au moteur électrique (211), de sorte que la carte de circuit imprimé (242) est refroidie par la rotation du ventilateur de refroidissement (211e)

2. Scie circulaire portative selon la revendication 1, où
l'arbre de sortie (211d) est monté sur le rotor (211c), et
la fraise rotative (212) est montée sur l'arbre de sortie (211d).

3. Scie circulaire portative selon la revendication 1ou 2, où
un bloc batterie (B) est fixé de manière amovible à une partie de base de montage de batterie (236) pourvue au niveau d'une partie arrière de la partie de prise principale (232) de la partie de poignée (230), et la carte de circuit imprimé (240 ; 242) est située entre le stator (211b) et le bloc batterie (B).

4. Scie circulaire portative selon la revendication 3, où
la partie de poignée (230) est fixée au corps d'outil principal (210), et
la carte de circuit imprimé (240 ; 242) est située sur un côté inférieur de la partie de poignée (230).

5. Scie circulaire portative selon l'une quelconque des revendications 1 à 4, où : le stator (211b) est situé sur un côté supérieur de la base (202).
